# EUROPEAN PATENT APPLICATION

(11) **EP 4 391 415 A1**
(43) Date of publication of application: **26.06.2024**
(21) Application number: 22866318.3
(22) Date of filing: 11.08.2022
(51) Int. Cl.: H04B 10/112, H04B 10/079

(54) **OPTICAL WIRELESS COMMUNICATION METHOD AND APPARATUS**

(30) Priority: 07.09.2021 CN 202111042245
(71) Applicant: Huawei Technologies Co., Ltd., Shenzhen, Guangdong 518129 (CN)
(72) Inventor: LV, Yibo, Shenzhen, Guangdong 518129 (CN); LIU, Shengbo, Shenzhen, Guangdong 518129 (CN); LI, Xu, Shenzhen, Guangdong 518129 (CN); ZHANG, Junping, Shenzhen, Guangdong 518129 (CN)
(74) Representative: Gill Jennings & Every LLP
(86) International application number: PCT/CN2022/111708
(87) International publication number: WO 2023/035844

(57) **Abstract**

Embodiments of this application provide an optical wireless communication method and an apparatus. The optical wireless communication method includes: A terminal device sends optical wireless communication OWC response information. The OWC response information includes a plurality of signal-to-noise ratios SNRs. The plurality of SNRs are obtained by the terminal device by measuring a plurality of optical wireless signals, and the plurality of SNRs are used to determine a first network device to send downlink data to the terminal device. The terminal device obtains downlink data. The first network device sending the downlink data to the terminal device is selected based on the SNRs of the optical wireless signals sent by a plurality of first network devices. Therefore, in a multi-light source coverage scenario, the selected first network device suffers relatively less inter-cell interference when sending the downlink data. This further helps improve communication performance.

## Description

This application claims priority to Chinese Patent Application No. 202111042245.7, filed with the China National Intellectual Property Administration on September 7, 2021 and entitled "OPTICAL WIRELESS COMMUNICATION METHOD AND APPARATUS", which is incorporated herein by reference in its entirety.

### TECHNICAL FIELD

This application relates to the field of communication technologies, and in particular, to an optical wireless communication method and an apparatus.

### BACKGROUND

A visible light communication (visible light communication, VLC) technology is a technology that uses a visible light wave as a signal carrier for wireless communication. The VLC uses a light emitting diode (light emitting diode, LED) indicator as a signal transmitter to transmit high-speed bright and dark signals for information transmission, and uses a photosensitive element as a signal receiver to receive light signals sent by the LED indicator. The VLC can combine LED lighting and communication, effectively reducing power consumption caused by communication. However, light emitting power consumption of the VLC is relatively high, and a problem like light pollution may occur. Therefore, it is not practical for user equipment (user equipment, UE) to perform uplink transmission by using visible light.

To address this key challenge, researchers propose to use communication technologies, such as radio frequency or infrared, to provide effective uplink transmission for the VLC, to implement bidirectional wireless communication of a VLC system. However, cell interference generated in a multi-light source coverage scenario is not considered for the currently proposed VLC system, resulting in relatively poor communication performance.

### SUMMARY

Embodiments of this application provide an optical wireless communication method and an apparatus, to reduce inter-cell interference in a multi-light source coverage scenario.

According to a first aspect, this application provides an optical wireless communication method. In the optical wireless communication method, a terminal device sends optical wireless communication OWC response information. The OWC response information includes a plurality of signal-to-noise ratios SNRs. The plurality of SNRs are obtained by the terminal device by measuring a plurality of optical wireless signals, and the plurality of SNRs are used to determine a first network device to send downlink data to the terminal device. The terminal device obtains downlink data.

It can be learned that, the first network device sending the downlink data to the terminal device in the method is selected based on the SNRs of the optical wireless signals sent by a plurality of first network device. Therefore, in a multi-light source coverage scenario, the selected first network device suffers relatively less inter-cell interference when sending the downlink data. This further helps improve communication performance.

In an optional implementation, when the terminal device feeds back the OWC response information to a wireless network Wi-Fi access point, or when the terminal device feeds back the OWC response information to an OWC transceiver unit, the OWC response information is carried in an OWC announcement frame, and the OWC announcement frame includes n address fields and n signal-to-noise ratio fields. An address i field indicates an address of a first network device i, and a signal-to-noise ratio i field indicates an SNR corresponding to the first network device i. i is an integer greater than or equal to 1 and less than or equal to n. n is an integer greater than or equal to 1.

It can be learned that the terminal device feeds back, to the Wi-Fi access device or the OWC transceiver unit by using the OWC announcement frame, addresses of n first network devices and SNRs corresponding to the n first network devices, so that a second network device determines, based on the addresses of the n first network devices and the SNRs corresponding to the n first network devices, the first network device to send the downlink data to the terminal device.

In an optional implementation, the OWC announcement frame further includes an SNR radio access field, and the SNR radio access field indicates an SNR of a radio signal received by the terminal device. In other words, the terminal device further feeds back the SNR of the received radio signal to the second network device.

In another optional implementation, when the terminal device feeds back the OWC response information to a cellular base station, the OWC response information is carried on a physical uplink control channel PUCCH. In other words, the terminal device feeds back the OWC response information to the cellular base station through the PUCCH.

In an optional implementation, the downlink data received by the terminal device includes one data block. Then, when correctly receiving the downlink data, the terminal device sends an acknowledgment-optical wireless communication ACK-OWC frame. The ACK-OWC frame includes a first control field and a first information field. The first control field indicates an identifier of the downlink data, and the first information field indicates the downlink data.

It can be learned that when correctly receiving the downlink data including one data block, the terminal device feeds back correct reception of the downlink data by using the ACK-OWC frame, so that the second network device does not resend the downlink data.

In another optional implementation, the downlink data received by the terminal device includes a plurality of data blocks. Then, when correctly receiving the downlink data, the terminal device sends a block acknowledgment-optical wireless communication BlockACK-OWC frame. The BlockACK-OWC frame includes a second control field and a second information field, the second control field indicates an identifier of each data block in the downlink data, and the second information field indicates each data block in the downlink data.

It can be learned that when correctly receiving the downlink data including the plurality of data blocks, the terminal device feeds back correct reception of the plurality of data blocks by using the BlockACK-OWC frame. Compared with a manner in which the terminal device feeds back, by using acknowledgment information after receiving one data block, correct reception of the data block, this manner can reduce a probability of a network collision caused by feeding back a plurality of pieces of acknowledgment information by the terminal device. This avoids unnecessary retransmission of some downlink data.

In an optional implementation, before sending the optical wireless communication OWC response information, the terminal device may further obtain optical wireless communication OWC request information. The OWC request information is used to request the terminal device to enable a wireless light receiving function. In this case, the terminal device responds to the OWC request information, that is, enables the wireless light receiving function, receives the plurality of optical wireless signals, determines the signal-to-noise ratios SNRs of the plurality of optical wireless signals, and further feeds back the plurality of SNRs to the second network device by using the OWC response information.

In an optional implementation, when the terminal device obtains the OWC request information from the Wi-Fi access device, the OWC request information is carried in an OWC request frame.

In another optional implementation, when the terminal device obtains the OWC request information from the cellular base station, the OWC request information is carried on a physical downlink control channel.

According to a second aspect, an embodiment of this application provides an optical wireless communication method. The optical wireless communication method corresponds to the optical wireless communication method according to the first aspect, and the optical wireless communication method is described from a perspective of a second network device. In the optical wireless communication method, the second network device obtains optical wireless communication OWC response information, where the OWC response information includes a plurality of signal-to-noise ratios SNRs, and the plurality of SNRs are obtained by measuring a plurality of optical wireless signals. Then, the second network device determines, based on the plurality of SNRs, a first network device to send downlink data, and sends the downlink data by using the first network device.

It can be learned that the second network device determines, based on the SNRs of the plurality of optical wireless signals fed back by a terminal device, the first network device to send the downlink data to the terminal device, and the plurality of SNRs are obtained by the terminal device by measuring the optical wireless signals from a plurality of first network devices. Therefore, in a multi-light source coverage scenario, the selected first network device suffers relatively less inter-cell interference when sending the downlink data. This can improve communication performance.

In an optional implementation, that the second network device sends the downlink data to the terminal device by using the first network device includes: when determining based on a maximum transmission rate supported by the first network device, to perform downlink transmission by using an OWC, sending the downlink data by using the first network device.

In an optional implementation, that the second network device determines, based on the plurality of SNRs, a first network device to send downlink data includes: determining, based on the plurality of SNRs and load information of a plurality of first network devices corresponding to the plurality of SNRs, the first network device to send the downlink data, where the load information is information that indicates a terminal device served by the first network device at a current moment or in a preset time period.

The second network device determines, based on the plurality of SNRs and the load information of the plurality of first network devices corresponding to the plurality of SNRs, the first network device to send the downlink data, so that when the determined first network device simultaneously sends the downlink data to the terminal device, no interference is caused to another terminal device. This can reduce inter-cell interference in a multi-light source coverage scenario, and further improves communication performance.

In an optional implementation, when the second network device is a Wi-Fi access device, the terminal device feeds back the OWC response information to the Wi-Fi access device. In this case, the OWC response information is carried in an OWC announcement frame. The OWC announcement frame includes n address fields and n signal-to-noise ratio fields. An address i field indicates an address of a first network device i, and a signal-to-noise ratio i field indicates an SNR corresponding to the first network device i. i is an integer greater than or equal to 1 and less than or equal to n. n is an integer greater than or equal to 1.

It can be learned that the second network device learns of, from the Wi-Fi access device by using the OWC announcement frame, addresses of n first network devices and SNRs corresponding to the n first network devices, and then determines, based on the addresses of the n first network devices and the SNRs corresponding to the n first network devices, the first network device to send the downlink data.

In an optional implementation, the OWC announcement frame further includes an SNR radio access field, and the SNR radio access field indicates an SNR of a radio signal received by the terminal device. In other words, the network device learns of, by using the OWC announcement frame, the SNR of the radio signal received by the terminal device.

In another optional implementation, when the network device is a cellular base station, the terminal device feeds back the OWC response information to the cellular base station. In this case, the OWC response information is carried on a physical uplink control channel.

In an optional implementation, when the downlink data sent by the second network device includes one data block, the second network device may further obtain an acknowledgment-optical wireless communication ACK-OWC frame. The ACK-OWC frame includes a first control field and a first information field. The first control field indicates an identifier of the downlink data, and the first information field indicates the downlink data.

It can be learned that when the downlink data sent by the second network device includes one data block, the second network device may further learn of, by obtaining the ACK-OWC frame, correct reception of the downlink data, and does not need to resend the downlink data.

In another optional implementation, when the downlink data sent by the second network device includes a plurality of data blocks, the second network device may further obtain a block acknowledgment-optical wireless communication BlockACK-OWC frame. The BlockACK-OWC frame includes a second control field and a second information field, the second control field indicates an identifier of each data block in the downlink data, and the second information field indicates each data block in the downlink data.

It can be learned that when the downlink data sent by the second network device includes the plurality of data blocks, the second network device may further learn of, by obtaining the BlockACK-OWC frame, correct reception of the plurality of data blocks, and therefore does not need to resend the plurality of data blocks.

In an optional implementation, before obtaining the OWC response information, the second network device may further send optical wireless communication OWC request information. The OWC request information is used to request the terminal device to enable a wireless light receiving function, so that the terminal device enables the wireless light receiving function, to receive the optical wireless signals from the plurality of first network devices.

In an optional implementation, when the second network device is a Wi-Fi access device, the Wi-Fi access device sends the OWC request information, where the OWC request information is carried in an OWC request frame.

In another optional implementation, when the second network device is a cellular base station, the cellular base station sends the OWC request information, where the OWC request information is carried on a physical downlink control channel PDCCH. In other words, the cellular base station sends the OWC request information through the PDCCH.

In an optional implementation, the second network device may further control a plurality of first network devices to periodically send the optical wireless signals to the terminal device through time division multiplexing, wavelength division multiplexing, or code division multiplexing, so that the terminal device obtains the optical wireless signal from the plurality of first network devices, and determines a plurality of signal-to-noise ratios SNRs based on the plurality of optical wireless signals.

According to a third aspect, this application further provides a communication apparatus. The communication apparatus has some or all functions of the terminal device according to the first aspect, or has some or all functions of the second network device according to the second aspect. For example, a function of the communication apparatus may have functions of the terminal device according to some or all embodiments of the first aspect of this application, or may have a function of independently implementing any embodiment of this application. The function may be implemented by hardware, or may be implemented by hardware executing corresponding software. The hardware or the software includes one or more units or modules corresponding to the functions.

In a possible design, a structure of the communication apparatus may include a processing unit (sometimes referred to as a processing module) and a transceiver unit (sometimes referred to as a communication unit). The processing unit is configured to support the communication apparatus in performing a corresponding function in the foregoing method. The transceiver unit is configured to support communication between the communication apparatus and another communication apparatus. The communication apparatus may further include a storage unit. The storage unit is coupled to the processing unit and the transceiver unit, and the storage unit stores program instructions and data that are necessary for the communication apparatus. Optionally, the communication apparatus further includes other component, for example, an antenna, an input/output module, and an interface. Such components may be hardware, software, or a combination of software and hardware.

In an implementation, the communication apparatus includes:
a transceiver unit, configured to send optical wireless communication OWC response information, where the OWC response information includes a plurality of signal-to-noise ratios SNRs, the plurality of SNRs are obtained by a terminal device by measuring a plurality of optical wireless signals, and the plurality of SNRs are used to determine a first network device to send downlink data to the terminal device.

The transceiver unit is further configured to obtain the downlink data.

In addition, for another optional implementation of the communication apparatus in this aspect, refer to related content of the first aspect. Details are not described herein again.

In another implementation, the communication apparatus includes:
a transceiver unit, configured to obtain optical wireless communication OWC response information, where the OWC response information includes a plurality of signal-to-noise ratios SNRs, and the plurality of SNRs are obtained by measuring a plurality of optical wireless signals; and
a processing unit, configured to determine, based on the plurality of SNRs, a first network device to send downlink data.

The processing unit is further configured to send the downlink data by using the first network device.

In addition, for another optional implementation of the communication apparatus in this aspect, refer to related content of the second aspect. Details are not described herein again.

In an example, the communication module may be a transceiver or a communication interface, the storage unit may be a memory, and the processing module may be a processor.

In an implementation, the communication apparatus includes:
a transceiver, configured to send optical wireless communication OWC response information, where the OWC response information includes a plurality of signal-to-noise ratios SNRs, the plurality of SNRs are obtained by a processor by measuring a plurality of optical wireless signals, and the plurality of SNRs are used to determine a first network device to send downlink data to the processor.

The transceiver is further configured to obtain the downlink data.

In addition, for another optional implementation of the communication apparatus in this aspect, refer to related content of the first aspect. Details are not described herein again.

In another implementation, the communication apparatus includes:
a processor, configured to obtain optical wireless communication OWC response information, where the OWC response information includes a plurality of signal-to-noise ratios SNRs, and the plurality of SNRs are obtained by measuring a plurality of optical wireless signals.

The processor is configured to determine, based on the plurality of SNRs, a first network device to send downlink data.

The processor is further configured to send the downlink data by using the first network device.

In addition, for another optional implementation of the communication apparatus in this aspect, refer to related content of the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, a digital baseband processor and a plurality of application processors (including but not limited to a graphics processing unit, a multimedia processor, and the like) may be integrated onto a same chip. Such a chip may be referred to as a system-on-a-chip (System on a Chip, SoC). Whether the components are separately disposed on different chips or integrated and disposed on one or more chips usually depends on a requirement of a product design. Implementation forms of the foregoing components are not limited in embodiments of this application.

According to a fourth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

Based on the foregoing principle, for example, the sending OWC response information in the foregoing method may be understood as outputting the OWC response information by the processor.

Unless otherwise specified, operations such as transmission, sending, and receiving related to the processor may be more generally understood as operations such as output, receiving, and input of the processor if the operations do not conflict with actual functions or internal logic of the operations in related descriptions, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read Only Memory, ROM). The memory and the processor may be integrated on a same chip, or may be separately disposed on different chips. A type of the memory and a manner of disposing the memory and the processor are not limited in this embodiment of this application.

According to a fifth aspect, this application further provides a communication system. The system may include but is not limited to one terminal device and one network device. In another possible design, the system may further include another device that interacts with the terminal device and the network device in the solutions provided in this application.

According to a sixth aspect, this application provides a computer-readable storage medium, configured to store a computer program. When the computer program is run by a communication apparatus, the methods performed by the terminal device and the network device in the foregoing aspects are performed.

According to a seventh aspect, this application further provides a computer program product including computer instructions. When the computer instructions are run on a computer, the methods performed by the terminal device and the network device in the foregoing aspects are performed.

According to an eighth aspect, this application provides a chip system. The chip system includes a processor and an interface. The interface is configured to obtain a program or instructions. The processor is configured to invoke the program or the instructions to implement or support a terminal device in implementing function in the first aspect, or is configured to invoke the program or the instructions to implement or support a second network device in implementing functions in the second aspect, for example, determining or processing at least one of data and information in the foregoing method. In a possible design, the chip system further includes a memory. The memory is configured to store program instructions and data that are necessary for a terminal. The chip system may include a chip, or may include a chip and another discrete device.

According to a ninth aspect, this application provides a communication apparatus including a processor, configured to execute a computer program or executable instructions stored in a memory. When the computer program or the executable instructions are executed, the apparatus is enabled to perform the methods according to the possible implementations of the first aspect and the second aspect.

In a possible implementation, the processor and the memory are integrated together.

In another possible implementation, the memory is located outside the communication apparatus.

For beneficial effects of the third aspect to the ninth aspect, refer to the beneficial effects of the first aspect or the second aspect. Details are not described herein again.

### BRIEF DESCRIPTION OF DRAWINGS

FIG. 1 is a schematic diagram of a structure of a communication system according to an embodiment of this application;
FIG. 2 is another schematic diagram of a structure of a communication system according to an embodiment of this application;
FIG. 3 is a schematic diagram of a structure of an OWC control unit according to an embodiment of this application;
FIG. 4 is still another schematic diagram of a structure of a communication system according to an embodiment of this application;
FIG. 5 is a schematic diagram of a principle of visible light communication according to an embodiment of this application;
FIG. 6 is a schematic diagram of interaction of an optical wireless communication method 100 according to an embodiment of this application;
FIG. 7a is a schematic diagram of a structure of an RTS-OWC frame according to an embodiment of this application;
FIG. 7b is another schematic diagram of a structure of an RTS-OWC frame according to an embodiment of this application;
FIG. 7c is a schematic diagram of a structure of a CTS-OWC frame according to an embodiment of this application;
FIG. 7d is another schematic diagram of a structure of a CTS-OWC frame according to an embodiment of this application;
FIG. 8 is a schematic diagram of determining an OWC transceiver unit according to an embodiment of this application;
FIG. 9 is a schematic diagram of a communication system according to an embodiment of this application;
FIG. 10a is a schematic diagram of a structure of an ACK-OWC frame according to an embodiment of this application;
FIG. 10b is a schematic diagram of a structure of a BlockACK-OWC frame according to an embodiment of this application;
FIG. 11 is a schematic diagram of a structure of a gateway according to an embodiment of this application;
FIG. 12 is a schematic diagram of a structure of a VLC communication system according to an embodiment of this application;
FIG. 13 is a schematic diagram of a dual-mode terminal device and network device according to an embodiment of this application;
FIG. 14 is another schematic diagram of interaction of an optical wireless communication method 200 according to an embodiment of this application;
FIG. 15 is still another schematic diagram of interaction of an optical wireless communication method 300 according to an embodiment of this application;
FIG. 16 is still another schematic diagram of interaction of an optical wireless communication method 400 according to an embodiment of this application;
FIG. 17 is a schematic diagram of a structure of a communication apparatus according to an embodiment of this application;
FIG. 18 is another schematic diagram of a structure of a communication apparatus according to an embodiment of this application;
FIG. 19 is a schematic diagram of a structure of a network device according to an embodiment of this application;
FIG. 20 is a schematic diagram of a structure of a terminal device according to an embodiment of this application; and
FIG. 21 is still another schematic diagram of a structure of a communication apparatus according to an embodiment of this application

### DESCRIPTION OF EMBODIMENTS

The following describes embodiments of this application with reference to the accompanying drawings in embodiments of this application.

To better understand an optical wireless communication method disclosed in embodiments of this application, a communication system to which embodiments of this application are applicable is first described.

### 1. Communication system

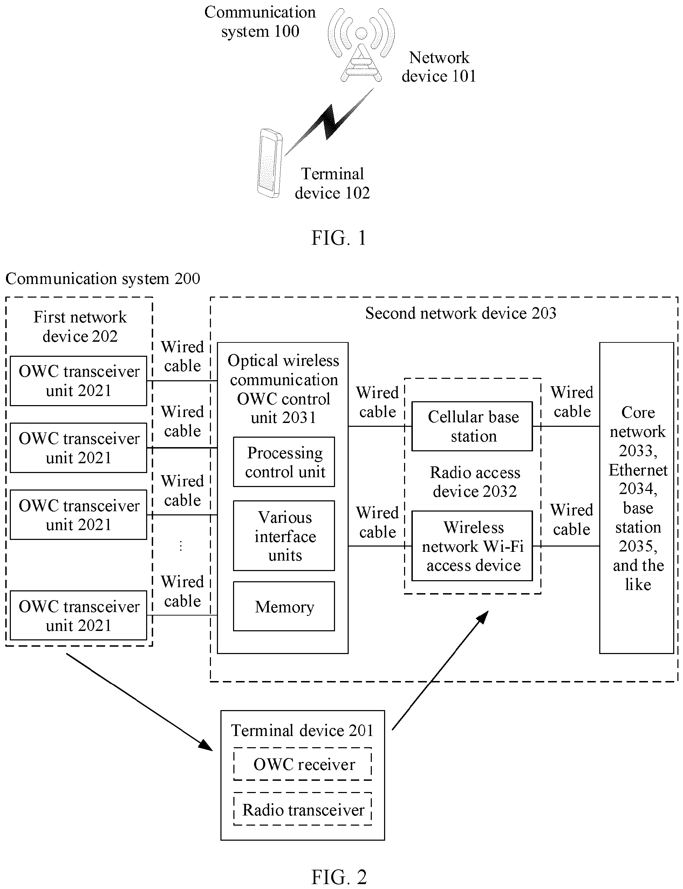

FIG. 1 is a schematic diagram of a structure of a communication system 100 according to an embodiment of this application. The communication system 100 may include but is not limited to one network device 101 and one terminal device 102. Quantities and forms of devices shown in FIG. 1 are used as an example and do not constitute a limitation on embodiments of this application. In actual application, there may be two or more network devices and two or more terminal devices. The communication system shown in FIG. 1 is described by using an example in which there is one network device and one terminal device, and the network device 101 can provide a service for the terminal device 102.

The technical solutions in embodiments of this application may be applied to a wireless communication system like a 5th-generation mobile communication (5th-generation, 5G) system, a satellite communication system, and a short-range wireless communication system. The wireless communication system mentioned in embodiments of this application includes but is not limited to a narrow-band internet of things (Narrow-Band Internet of Things, NB-IoT) system, a long term evolution (Long Term Evolution, LTE) system, three main application scenarios of a 5G communication system including enhanced mobile broadband (enhanced mobile broadband, eMBB), ultra-reliable low-latency communication (ultra-reliable low-latency communication, URLLC), and massive machine type communication (massive machine type of communication, mMTC). With continuous development of communication technologies, the wireless communication system further includes a subsequent evolved communication system like a 6th-generation mobile communication (6th-generation, 6G) system.

Embodiments of this application may be applied to a communication scenario in which a high-speed network access service is provided for a scenario in which a light emitting diode (light emitting diode, LED) indicator is used for lighting or a laser light source like a vertical-cavity surface-emitting laser (Vertical-Cavity Surface-Emitting Laser, VCSEL) is included, for example, a scenario in which a light transmitter is available, such as an indoor scenario, an airplane, a high-speed railway, a hospital, an outdoor street indicator, or an outdoor billboard.

In embodiments of this application, the network device is an apparatus deployed in a radio access network to provide a wireless communication function for the terminal device. The network device may include various forms of macro base stations, micro base stations (also referred to as small stations), relay stations, access points, and the like. In systems using different radio access technologies, names of devices having a function of a base station may vary. For example, in an LTE system, the device is referred to as an evolved NodeB (evolved NodeB, eNB or eNodeB). In a 5G new radio (new radio, NR) system, a next generation NodeB (next generation NodeB, gNB) may alternatively include a central unit (central unit, CU) and a distributed unit (distributed unit, DU) in a cloud access network (cloud radio access network, Cloud RAN) system, and further include a device that provides the function of the base station in device-to-device (Device-to-Device, D2D), vehicle-to-everything (vehicle-to-everything, V2X), machine-to-machine (machine-to-machine, M2M) communication, and internet of things (Internet of Things) communication, for example, a road side unit (road side unit, RSU) in a V2X technology. For ease of description, in all embodiments of this application, all the foregoing apparatuses that provide a wireless communication function for the terminal are referred to as a network device, or a BS.

The network device in embodiments of this application may be an apparatus that has a wireless light transceiver function and that can provide a wireless communication function for the terminal device. Wireless light includes visible light, infrared light, ultraviolet light, terahertz light, and the like.

The terminal device in the inventive solutions in embodiments of this application may include various handheld devices, vehicle-mounted devices, wearable devices, or computing devices that have a wireless communication function, or another processing device connected to a wireless modem. A terminal may also be referred to as a terminal device, or may be a subscriber unit (subscriber unit), a cellular phone (cellular phone), a smartphone (smart phone), a wireless data card, a personal digital assistant (Personal Digital Assistant, PDA) computer, a tablet computer, a wireless modem (modem), a handheld device (handset), a laptop computer (laptop computer), a machine type communication (Machine Type Communication, MTC) terminal, a device-to-device (device-to-device, D2D) terminal device, a vehicle-to-everything (vehicle-to-everything, V2X) terminal device, a machine-to-machine (machine-to-machine, M2M) terminal device, an internet of things (internet of things, IoT) terminal device, a virtual reality (virtual reality, VR) terminal device, an augmented reality (augmented reality, AR) terminal device, a terminal in industrial control (industrial control), a terminal in self driving (self driving), a terminal in telemedicine (remote medical), a terminal in a smart grid (smart grid), a terminal in transportation safety (transportation safety), a terminal in a smart city, or a terminal in a smart home (smart home). The terminal further includes devices such as a satellite, an aircraft, an uncrewed aerial vehicle, a balloon, and the like.

In addition, an embodiment of this application further provides a communication system 200 shown in FIG. 2. As shown in FIG. 2, the communication system 200 includes a terminal device 201, a first network device 202, and a second network device 203. The terminal device 201 includes an optical wireless communication (optical wireless communication, OWC) receiver and a radio transceiver, that is, the terminal device has a wireless light receiving function and a radio transceiver function. Wireless light includes visible light, ultraviolet light, and the like. The second network device 203 may be an OWC control unit 2031. Optionally, the second network device may be a radio access device 2032 (for example, a cellular base station, a wireless network (Wi-Fi) access device, or a Bluetooth access device), a core network 2033, the Ethernet 2034, a base station 2035, or the like. The first network device 202 may be an OWC transceiver unit 2021. The OWC control unit 2031 may control a plurality of OWC transceiver units 2021. Each of the OWC control unit 2031 and the plurality of OWC transceiver units 2021 may be an independent network device. For example, each of the OWC control unit 2031 and the OWC transceiver units 2021 is an independent 5G base station. When each of the OWC control unit 2031 and the plurality of OWC transceiver units 2021 is the independent network device, each OWC transceiver unit 2021 may be connected to the OWC control unit 2031 via a wired cable. The wired cable means a network cable, a universal serial bus (universal serial bus, USB), a power line, or another high-speed data transmission cable. In addition, the OWC control unit 2031 may be further connected to the radio access device 2032 via the wired cable. The radio access device 2032 is connected to the core network 2033, the Ethernet 2034, the base station 2035, and the like via the wired cable.

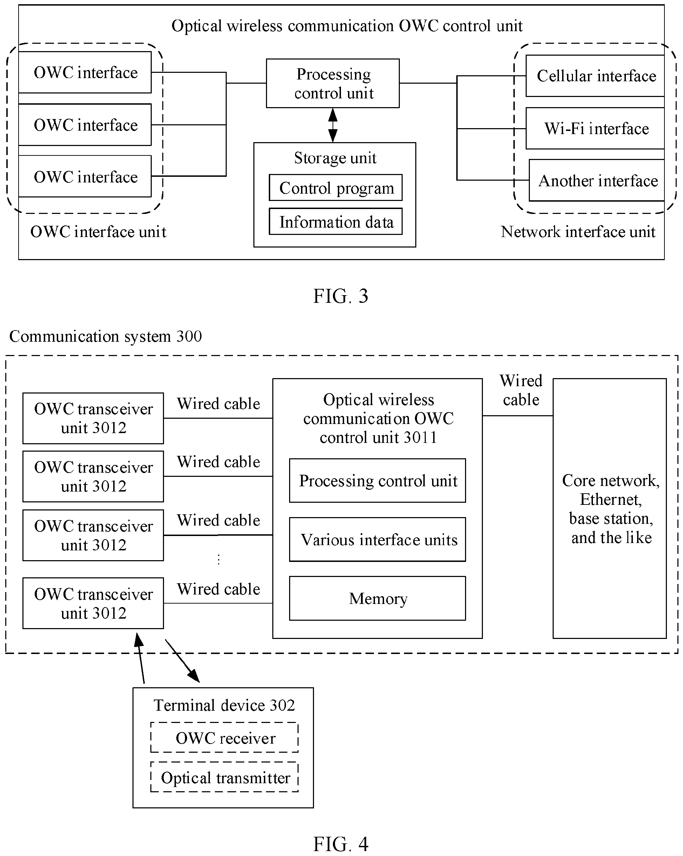

When each of the OWC control unit 2031 and the plurality of OWC transceiver units 2021 is the independent network device, a schematic diagram of a structure of the OWC control unit is shown in FIG. 3. The OWC control unit 2031 includes a plurality of OWC interfaces, a processing control unit, a storage unit, and a network interface unit. Each OWC interface is configured to connect to one OWC transceiver unit 2021. The network interface unit includes another interface like a cellular interface and a Wi-Fi interface, and the network interface unit is configured to connect the Ethernet and the radio access device. The storage unit is configured to store a control program and information data, and the processing control unit is configured to execute the control program.

Optionally, the OWC control unit 2031 and the plurality of OWC transceiver units 2021 may alternatively be integrated into one network device. For example, the OWC control unit 2031 and the plurality of OWC transceiver units 2021 are integrated into one 5G base station.

In the communication system 200, the OWC control unit 2031 or the radio access device may send OWC request information to the terminal device, to request the terminal device to enable a wireless light receiving function. Then, the terminal device enables the wireless light receiving function, receives optical wireless signals from the plurality of OWC transceiver units 2021, and feeds back signal-to-noise ratios of the plurality of optical wireless signals to the OWC control unit 2031 by using the radio access device. In this case, the OWC control unit 2031 determines, based on the plurality of signal-to-noise ratios, an OWC transceiver unit 2021 to send downlink data to the terminal device, and the OWC control unit 2031 controls the determined OWC transceiver unit 2021 to send the downlink data to the terminal device. It can be learned that the terminal device may perform uplink radio communication with the radio access device, and the OWC control unit 2031 may control the OWC transceiver unit 2021 that is determined based on the plurality of signal-to-noise ratios, to perform downlink optical wireless communication with the terminal device.

An embodiment of this application further provides a communication system 300 shown in FIG. 4. The communication system 300 includes an OWC control unit 3011, a plurality of OWC transceiver units 3012, and a terminal device 302. The OWC control unit 3011 is connected to the plurality of OWC transceiver units 3012 via a wired cable, that is, each of the OWC control unit and the OWC transceiver unit is an independent network device. In this case, the OWC control unit is shown in FIG. 3. Details are not described again. Optionally, the OWC control unit and the OWC transceiver units are integrated into one network device. The terminal device 302 includes an OWC receiver and an optical transmitter, that is, the terminal device 302 has a wireless light transceiver function. The optical transmitter includes a light emitting device that emits light emitting diode (light emitting diode, LED) visible light, VCSEL laser/visible light, infrared light, and ultraviolet light. The OWC control unit 3011 is further connected to a core network, the Ethernet, a base station, and the like via a wired cable.

In the communication system 300, the OWC control unit may send OWC request information to the terminal device, to request the terminal device to enable a wireless light receiving function. Then, the terminal device enables the wireless light receiving function, receives optical wireless signals from the plurality of OWC transceiver units, and feeds back signal-to-noise ratios of the plurality of optical wireless signals to the OWC control unit by using the OWC transceiver units. In this case, the OWC control unit determines, based on the plurality of signal-to-noise ratios, an OWC transceiver unit to send downlink data to the terminal device, and the OWC control unit controls the determined OWC transceiver unit to send the downlink data to the terminal device. It can be learned that the terminal device may perform uplink optical wireless communication with the OWC control unit by using the OWC transceiver unit, and the OWC control unit may also perform downlink optical wireless communication with the terminal device by using the OWC transceiver unit. In other words, in the communication system 300, all-optical communication may be performed between the terminal device and the OWC control unit. The communication system 300 is applicable to short-range indoor communication.

A visible light communication (visible light communication, VLC) technology is a technology that uses a visible light wave as a signal carrier for wireless communication. The VLC uses an indoor lighting device to provide downlink data transmission for a lighted area. However, light emitting power consumption of the VLC is relatively high, and a problem like light pollution may occur. Therefore, it is not practical for user equipment (user equipment, UE) to perform uplink transmission by using visible light. Therefore, communication technologies such as radio frequency or infrared is further proposed to provide effective uplink transmission for the VLC, to implement bidirectional wireless communication of a VLC system. The VLC is integrated with current communication technologies, to effectively increase a wireless network system capacity, improve user experience of wireless communication, and address challenges brought by various potential high-speed services to a wireless network.

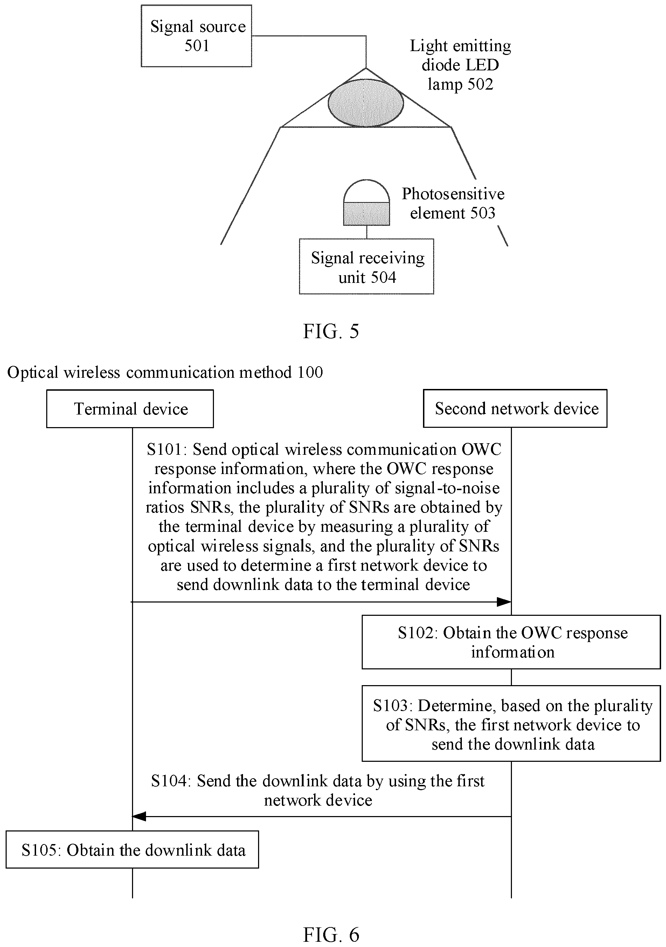

FIG. 5 is a schematic diagram of a principle of visible light communication. A visible light communication system includes a signal source 501, a light emitting diode (light emitting diode, LED) indicator 502, a photosensitive element 503, and a signal receiving unit 504. The LED indicator 502 transmits a high-speed light and dark flicker signal modulated by the signal source. The signal receiving unit 504 in a lighting coverage area of the LED indicator 502 receives, by using the photosensitive element 503, an optical signal that changes in brightness, and converts the optical signal into an electrical signal for decoding, to implement downlink optical wireless communication.

A current visible light communication system integrates communication technologies such as VLC, radio frequency, and infrared. The VLC is only responsible for downlink transmission, and other existing wireless communication technologies are used for uplink transmission, such as a long term evolution (long term evolution, LTE) technology, a wireless network (Wi-Fi), Bluetooth, and ultra-wideband.

However, cell interference generated in a multi-light source coverage scenario is not considered for the currently proposed VLC system, resulting in relatively poor communication performance.

An embodiment of this application provides an optical wireless communication method 100. In the optical wireless communication method 100, a terminal device sends optical wireless communication OWC response information. The OWC response information includes a plurality of signal-to-noise ratios (signal to noise ratios, SNRs). The plurality of SNRs are obtained by the terminal device by measuring a plurality of optical wireless signals, and the plurality of SNRs are used to determine a first network device to send downlink data to the terminal device. The second network device determines, based on the plurality of SNRs, a first network device to send downlink data, and sends the downlink data by using the first network device. Then, the terminal device obtains the downlink data. In other words, the first network device sending the downlink data to the terminal device is selected based on the SNRs of the optical wireless signals sent by a plurality of first network devices. Therefore, in a multi-light source coverage scenario, the selected first network device suffers relatively less inter-cell interference when sending the downlink data. This further helps improve communication performance.

An embodiment of this application further provides an optical wireless communication method 200 based on the communication system 200 shown in FIG. 2. The method uses an example in which a Wi-Fi access device performs downlink optical wireless communication with a terminal device, and the terminal device performs uplink radio communication with an OWC control unit. In the optical wireless communication method 200, the Wi-Fi access device sends OWC request information to the terminal device, to request the terminal device to enable a wireless light receiving function. The terminal device responds to the OWC request information, determines SNRs of optical wireless signals from a plurality of OWC transceiver units, and feeds back the plurality of SNRs to the Wi-Fi access device by using OWC response information. The Wi-Fi access device forwards the OWC response information to the OWC control unit. The OWC control unit determines, based on the plurality of SNRs, an OWC transceiver unit to send downlink data to the terminal device, and controls the determined OWC transceiver unit to send the downlink data to the terminal device at a maximum transmission rate supported by the OWC transceiver unit. When correctly receiving the downlink data, the terminal device feeds back acknowledgment information to the OWC control unit by using the Wi-Fi access device. It can be learned that, when the OWC control unit performs downlink optical wireless communication with the terminal device, the downlink data is sent to the terminal device by the OWC transceiver unit determined based on the plurality of SNRs fed back by the terminal device. This can reduce inter-cell interference in a multi-light source coverage scenario.

An embodiment of this application further provides an optical wireless communication method 300 based on the communication system 200 shown in FIG. 2. The method uses an example in which a cellular base station performs downlink optical wireless communication with a terminal device, and the terminal device performs uplink radio communication with an OWC control unit. A difference from the optical wireless communication method 200 lies in that the cellular base station sends OWC request information to the terminal device through a physical downlink control channel (physical downlink control channel, PDCCH), and the terminal device feeds back OWC response information to the cellular base station through a physical uplink control channel (physical uplink control channel, PUCCH). In addition, an OWC transceiver unit to send downlink data to the terminal device is also determined based on a plurality of SNRs fed back by the terminal device. Therefore, this can also reduce inter-cell interference in a multi-light source coverage scenario.

An embodiment of this application further provides an optical wireless communication method 400 based on the communication system 300 shown in FIG. 3. The method uses an example in which an OWC control unit performs downlink optical wireless communication with a terminal device, and the terminal device performs uplink optical wireless communication with an OWC control unit, that is, the OWC control unit performs all-optical communication with the terminal device. In the optical wireless communication method 400, the OWC control unit sends OWC request information to the terminal device by using any one of a plurality of OWC transceiver units, to request the terminal device to enable a wireless light transceiver function. The terminal device responds to the OWC request information, determines SNRs of optical wireless signals from the plurality of OWC transceiver units, and feeds back the plurality of SNRs to the OWC transceiver unit by using OWC response information. The OWC transceiver unit forwards the OWC response information to the OWC control unit. Then, the OWC control unit determines, based on the plurality of SNRs, an OWC transceiver unit to send downlink data to the terminal device, and controls the determined OWC transceiver unit to send the downlink data to the terminal device at a maximum transmission rate supported by the OWC transceiver unit. When correctly receiving the downlink data, the terminal device feeds back acknowledgment information to the OWC control unit by using the OWC transceiver unit. In the method, the OWC transceiver unit to send the downlink data to the terminal device is also determined based on a plurality of SNRs fed back by the terminal device. Therefore, this can also reduce inter-cell interference in a multi-light source coverage scenario.

### 2. Optical wireless communication method 100

An embodiment of this application provides an optical wireless communication method 100. FIG. 6 is a schematic diagram of interaction of an optical wireless communication method 100. The optical wireless communication method 100 is described from a perspective of interaction between a second network device and a terminal device. The optical wireless communication method 100 includes but is not limited to the following steps.

S101: The terminal device sends optical wireless communication OWC response information, where the OWC response information includes a plurality of signal-to-noise ratios SNRs, the plurality of SNRs are obtained by the terminal device by measuring a plurality of optical wireless signals, and the plurality of SNRs are used to determine a first network device to send downlink data to the terminal device.

In an optional implementation, the terminal device has a wireless light receiving function, and the second network device is a radio access device. Before the terminal device sends the optical wireless communication OWC response information, the radio access device sends optical wireless communication OWC request information to the terminal device, where the OWC request information is used to request the terminal device to enable a wireless light receiving function. Then, the terminal device responds to the OWC request information, that is, enables the wireless light receiving function, and determines signal-to-noise ratios SNRs of the plurality of optical wireless signals. Further, the terminal device feeds back the plurality of SNRs to the radio access device by using the OWC response information.

In addition, when the radio access device is a Wi-Fi access device, the OWC request information is carried in an OWC request frame, that is, the Wi-Fi access device sends the OWC request information to the terminal device by using the OWC request frame. When the radio access device is a cellular base station, the OWC request information is carried in a PDCCH, that is, the cellular base station sends the OWC request information to the terminal device through the PDCCH.

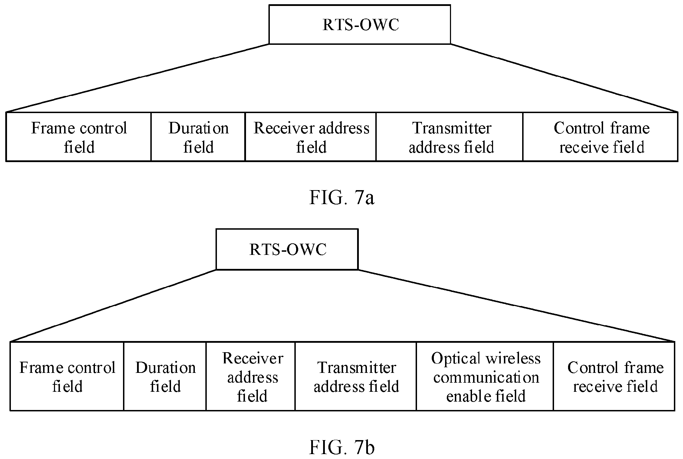

The OWC request frame is a request to send-optical wireless communication (request to send-optical wireless communication, RTS-OWC) frame. A frame structure of the RTS-OWC frame may be a frame structure of an RTS frame in the original 802.11 protocol standard. To be specific, the frame structure of the RTS-OWC frame is shown in FIG. 7a. The RTS-OWC frame includes a frame control (frame control) field, a duration (duration) field, a receiver address (Receiver Address) field, a transmitter address (Transmitter Address) field, and a frame check sequence (FCS) field. In addition, a frame length of the RTS-OWC frame shown in FIG. 7a is 20 bytes.

Optionally, the second network device may add an optical wireless communication enable (OWC-En) field of one byte (8 bits) after the transmitter address (TA) field in the frame structure shown in FIG. 7a. To be specific, a frame structure shown in FIG. 7b indicates the frame structure of the RTS-OWC frame. The OWC-En field indicates whether an OWC service of the second network device is enabled. For example, 11110000 indicates that the second network device enables the OWC service function, and 00000000 indicates that the second network device does not enable the OWC service function. In this case, a frame length of the RTS-OWC frame shown in FIG. 7b is 21 bytes. The frame structure of the RTS-OWC frame is not limited in this embodiment of this application.

In another optional implementation, the terminal device has a wireless light transceiver function, and the second network device includes an OWC control unit and an OWC transceiver unit. The OWC control unit sends optical wireless communication OWC request information to the terminal device by using the OWC transceiver unit, where the OWC request information is used to request the terminal device to enable the wireless light transceiver function. The OWC request information is carried in an OWC request frame, that is, the OWC control unit sends the OWC request information to the terminal device by using the OWC request frame. Then, the terminal device responds to the OWC request information, that is, enables the wireless light receiving function, and determines signal-to-noise ratios SNRs of the plurality of optical wireless signals. Further, the terminal device feeds back the plurality of SNRs to the radio access device by using the OWC response information.

In still another optional implementation, the terminal device has a wireless light receiving function or a wireless light transceiver function. The terminal device enables the optical wireless receiving function, and then sends request information to an OWC control unit. The request information is used to request the OWC control unit to enable the wireless light transceiver function, and control a plurality of OWC transceiver units to periodically send optical wireless signals to the terminal device, so that the terminal device obtains the optical wireless signals from the plurality of OWC transceiver units, and determines a plurality of SNRs based on the plurality of optical wireless signals.

The optical wireless signals are periodically sent by the OWC control units to the terminal device by using the OWC transceiver unit through time division multiplexing, wavelength division multiplexing, or code division multiplexing. It may be understood that the OWC control unit generates an OWC beacon signal (beacon-OWC) frame, and periodically sends the beacon-OWC frame to the terminal device by using the OWC transceiver unit through time division multiplexing, wavelength division multiplexing, or code division multiplexing. The beacon-OWC frame includes but is not limited to an address of an OWC transceiver unit and a beacon-OWC frame sending cycle. In this manner, the OWC control unit controls the plurality of OWC transceiver units to send beacon-OWC frames through time division multiplexing, wavelength division multiplexing, or code division multiplexing, so that different beacon-OWC frames do not interfere with each other.

Therefore, the terminal device obtains the optical wireless signals (Beacon-OWC frames) from different OWC transceiver units, and estimates signal-to-noise ratios of the received beacon-OWC frames. It may be understood that the terminal device estimates signal-to-noise ratios of the beacon-OWC frames based on the received beacon-OWC frames includes: If signal strength RSI_beacon occurring when receiving a beacon-OWC frame is recorded, and maximum signal strength RSI_N occurring before and after the beacon-OWC frame is received or when there is no optical wireless signal is recorded, a signal-to-noise ratio SNR of the received beacon-OWC frame = RSI_beacon/RSI_N.

Further, the terminal device feeds back the plurality of estimated SNRs to the network device by using the OWC response information. For example, the OWC transceiver units managed by the OWC control unit include an OWC transceiver unit #1, an OWC transceiver unit #2, and an OWC transceiver unit #3, and the OWC control unit controls the OWC transceiver unit #1, the OWC transceiver unit #2, and the OWC transceiver unit #3 to periodically send beacon-OWC frames to the terminal device through code division multiplexing. Then, the terminal device receives a beacon-OWC frame #1 from the OWC transceiver unit #1, a beacon-OWC frame #2 from the OWC transceiver unit #2, and a beacon-OWC frame #3 from the OWC transceiver unit #3. SNRs estimated by the terminal device based on the received beacon-OWC frame #1, beacon-OWC frame #2, and beacon-OWC frame #3 are respectively an SNR #1, an SNR #2, and an SNR #3. Then, the terminal device feeds back the SNR #1, the SNR #2, and the SNR #3 to the network device by using the OWC response information.

Optionally, the OWC response information further includes an address of an OWC transceiver unit to send a beacon-OWC frame, so that the OWC control unit determines, from the plurality of OWC transceiver units that send the beacon-OWC frames based on addresses of the plurality of OWC transceiver units, the first network device (an OWC transceiver unit) to send the downlink data to the terminal device.

It may be understood that, if the terminal device receives a plurality of beacon-OWC frames, the terminal device is located in cells covered by the plurality of OWC transceiver units, and a cell covered by one OWC transceiver unit is uniquely identified by OWC address information in the beacon-OWC frame.

In an optional implementation, the OWC response information is carried in an OWC announcement frame, the OWC announcement frame includes n address fields and n signal-to-noise ratio fields. An address i field indicates an address of a first network device i (an OWC transceiver unit i), and a signal-to-noise ratio i field indicates an SNR corresponding to the first network device i (the OWC transceiver unit i). i is an integer greater than or equal to 1 and less than or equal to n. n is an integer greater than or equal to 1. The SNR corresponding to the first network device i is an SNR of an optical wireless signal sent by the first network device i to the terminal device, namely, an SNR of an optical wireless signal sent by the OWC transceiver unit i to the terminal device. For example, a signal-to-noise ratio 2 field indicates an SNR of an optical wireless signal sent by an OWC transceiver unit 2 to the terminal device.

The OWC announcement frame is a clear to send-optical wireless communication (clear to send-optical wireless communication, CTS-OWC) frame. The CTS-OWC frame is determined based on a current CTS frame. When one network device accesses a plurality of terminal devices, before receiving a signal from the network device, a target terminal device needs to send a CST frame to the network device, to indicate the network device to suspend communication with another terminal device, so that the another terminal device does not send a signal to the network device when the network device sends the signal to the target terminal device, preventing interference with communication between the network device and the target terminal device. A frame length of the CTS frame is 14 bytes in the current 802.11 standard.

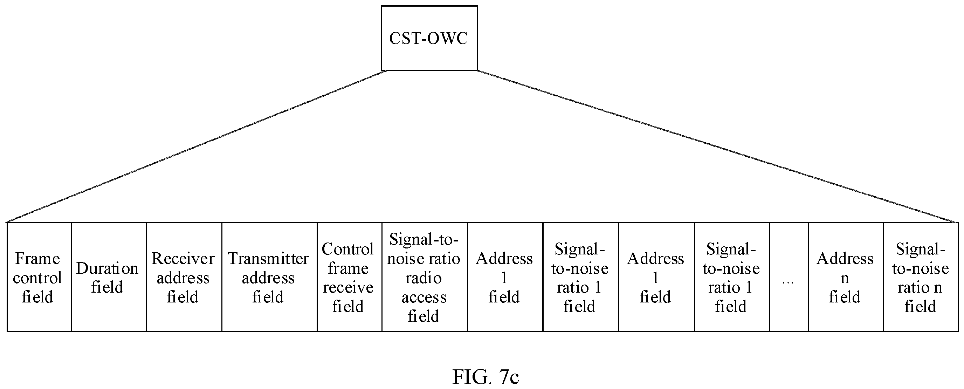

In an optional implementation, a frame format of the CTS-OWC frame is shown in FIG. 7c. Each address field in the CTS-OWC frame is adjacent to a signal-to-noise ratio field corresponding to the address field, that is, an address i field is adjacent to a signal-to-noise ratio i field. For example, an address 1 field of an OWC transceiver unit 1 is followed by a signal-to-noise ratio 1 field corresponding to the OWC transceiver unit 1, a signal-to-noise ratio 1 field is followed by an address 2 field of an OWC transceiver unit 2 and a signal-to-noise ratio 2 field corresponding to the OWC transceiver unit 2, until a signal-to-noise ratio n-1 field is followed by an address n field of an OWC transceiver unit n and a signal-to-noise ratio n field corresponding to the OWC transceiver unit n.

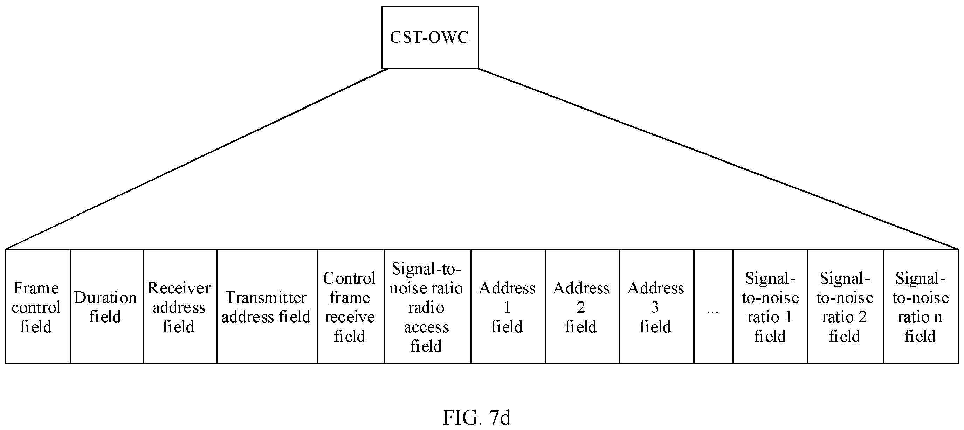

In another optional implementation, a frame format of the CTS-OWC frame is shown in FIG. 7d. The n address fields in the CTS-OWC frame are followed by the n signal-to-noise ratio fields, and each signal-to-noise ratio field corresponds to an address field. In other words, a first network device corresponding to each signal-to-noise ratio field is the same as a first network device indicated by the address field, that is, an OWC transceiver unit corresponding to a signal-to-noise ratio i field is an OWC transceiver unit indicated by an address i field. For example, an OWC transceiver unit 3 corresponding to a signal-to-noise ratio 3 field is an OWC transceiver unit indicated by an address 3 field.

In an optional implementation, the n signal-to-noise ratios indicated by the n signal-to-noise ratio fields in FIG. 7c and FIG. 7d are sorted in a descending order. In other words, a value of a signal-to-noise ratio indicated by a signal-to-noise ratio (i-1) field is greater than a signal-to-noise ratio indicated by the signal-to-noise ratio i field. For example, a signal-to-noise ratio indicated by the signal-to-noise ratio 3 field is 67 dB, and a signal-to-noise ratio indicated by a signal-to-noise ratio 4 field is 59 dB. In this manner, when decoding the CTS-OWC frame, the second network device may preferably obtain, through decoding, a maximum signal-to-noise ratio value in the plurality of signal-to-noise ratios. This helps the second network device determine, as soon as possible based on the maximum signal-to-noise ratio, the OWC transceiver unit to send the downlink data to the terminal device, that is, this helps shorten a processing time of the second network device.

As shown in FIG. 7c and FIG. 7d, the OWC announcement frame (the CTS-OWC frame) further includes an SNR radio access (signal to noise ratio radio access, SNR RA) field, and the SNR radio access field indicates an SNR of a radio signal received by the terminal device. The radio signal is sent by the radio access device like the Wi-Fi access device or the cellular base station, to the terminal device, so that the terminal device estimates an SNR of the radio signal based on the received radio signal. It can be learned that the terminal device also feeds back the SNR of the received radio signal to the second network device by using the OWC response information, so that the second network device (the OWC control unit) subsequently sets, based on the SNR of the radio signal, a direction angle, transmit power, and the like of sending the optical wireless signal by the OWC transceiver unit.

As shown in FIG. 7c and FIG. 7d, the OWC announcement frame (the CTS-OWC frame) further includes a frame control (Frame Control) field, a duration (Duration) field, a receiver address (Receiver Address) field, a transmitter address (transmitter address) field, and a control frame receive (FCS) field.

A frame length of the CTS-OWC frame is not limited in this embodiment of this application. For example, the frame length of the CTS-OWC frame is 24 bytes to 48 bytes.

In another optional implementation, when the second network device is the cellular base station, the terminal device feeds back the OWC response information to the cellular base station. In this case, the OWC response information is carried in a PUCCH. In other words, the terminal device feeds back the OWC response information to the cellular base station through the PUCCH.

In still another optional implementation, remaining fields of some specific frames in a current protocol carry the OWC response information. In this manner, there is no need to add one new frame to carry the OWC response information, reducing signaling overheads.

S102: The second network device obtains the OWC response information.

It may be understood that the second network device obtains the OWC response information from the terminal device. The second network device obtaining the OWC response information from the terminal device may mean that the second network device receives the OWC response information from the terminal device. Optionally, the second network device obtaining the OWC response information from the terminal device may mean that the second network device obtains the OWC response information from the terminal device through a relay node. An implementation in which the network device obtains the OWC response information is not limited in this embodiment of this application.

S103: The second network device determines, based on the plurality of SNRs, the first network device to send the downlink data.

It may be understood that the second network device is the OWC control unit, and the determined first network device to send the downlink data to the terminal device is the OWC transceiver unit. In other words, the OWC control unit determines, based on the plurality of SNRs in the OWC response information, the OWC transceiver unit to send the downlink data to the terminal device.

In an optional implementation, that the OWC control unit determines, based on the plurality of SNRs, the OWC transceiver unit to send the downlink data to the terminal device includes: The OWC control unit determines, based on the plurality of SNRs and load information of a plurality of first network devices corresponding to the plurality of SNRs, the first network device. The load information is information that indicates a terminal device served by the first network device at a current moment or in a preset time period. The first network device is the OWC transceiver unit that sends the optical wireless signal to the terminal device. In other words, the OWC control unit determines, based on the plurality of SNRs and information about a terminal device served by the plurality of OWC transceiver units at the current moment or in the preset time period, the OWC transceiver unit to send the downlink data to the terminal device. In this manner, both signal quality of an optical wireless signal sent by each OWC transceiver unit and information about a terminal device served by each OWC transceiver unit in the preset time period are considered. In this case, when the OWC transceiver unit determined by the OWC control unit simultaneously sends the downlink data to the terminal device, no interference is caused to another terminal device, that is, this can reduce inter-cell interference in a multi-light source coverage scenario, and further improve communication performance.

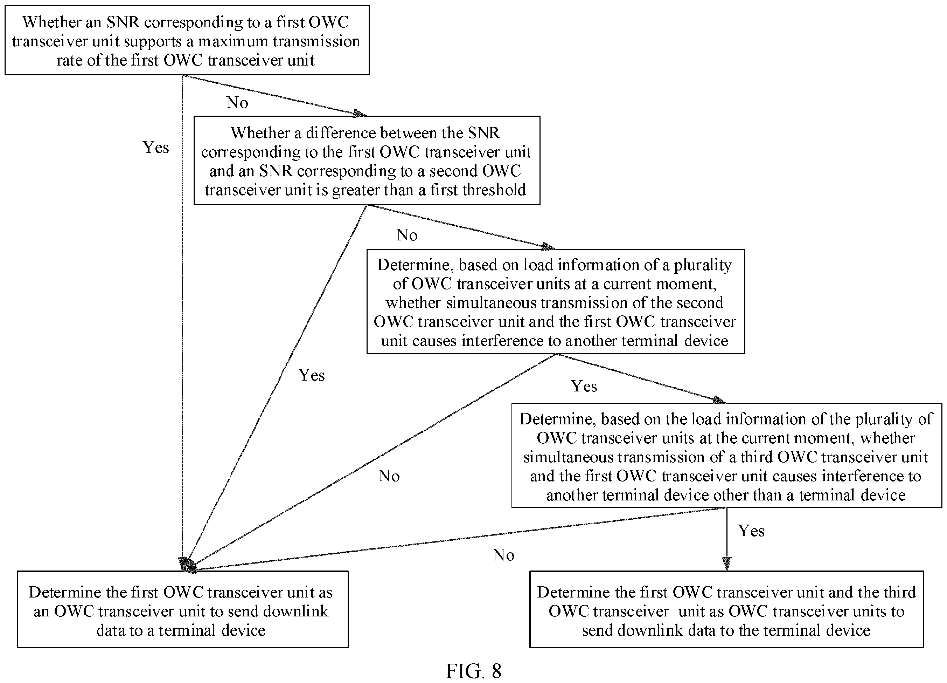

In an optional implementation, an implementation in which the OWC control unit determines, based on the plurality of SNRs, the OWC transceiver unit to send the downlink data to the terminal device may be shown in FIG. 8, that is, the implementation may be as follows:
Implementation 1: When an SNR corresponding to a first OWC transceiver unit supports a maximum transmission rate of the first OWC transceiver unit, the OWC control unit determines that the first OWC transceiver unit is the OWC transceiver unit to send the downlink data to the terminal device.

The first OWC transceiver unit is an OWC transceiver unit corresponding to a largest SNR in the plurality of SNRs, and the maximum transmission rate of the first OWC transceiver unit is a maximum transmission rate supported by the first OWC transceiver unit. For example, the OWC response information includes the SNR #1, the SNR #2, and the SNR #3, and the SNR #1, the SNR #2, and the SNR #3 are respectively 24 dB, 53 dB, and 28 dB. In this case, the first OWC transceiver unit is an OWC transceiver unit corresponding to the SNR #2, namely, the OWC transceiver unit #2.

In other words, if the OWC transceiver unit corresponding to the largest SNR in the plurality of SNRs in downlink response information can support the maximum transmission rate of the OWC transceiver unit, the OWC control unit determines only the OWC transceiver unit corresponding to the largest SNR as the OWC transceiver unit to send the downlink data to the terminal device.

It can be learned that when the plurality of OWC transceiver units managed by the OWC control unit send the optical wireless signals to the terminal device, the OWC control unit selects the OWC transceiver unit corresponding to the largest SNR in the plurality of SNRs to send the downlink data to the terminal device. This can reduce interference generated when the plurality of OWC transceiver units simultaneously send the downlink data to the terminal device. For example, the OWC control unit enables the OWC transceiver unit #1, the OWC transceiver unit #2, and the OWC transceiver unit #3 to send optical wireless signals to the terminal device, but an SNR of an optical wireless signal sent by the OWC transceiver unit #2 is the largest, that is, signal quality of the optical wireless signal sent by the OWC transceiver unit #2 to the terminal device is the best. Then, the OWC control unit determines only that the OWC transceiver unit #2 is used as the OWC transceiver unit to send the downlink data to the terminal device, and disables the OWC transceiver unit #1 and the OWC transceiver unit #3, to prevent the OWC transceiver unit #1 and the OWC transceiver unit #2 from interfering with the OWC transceiver unit #1. This improves communication performance.

Implementation 2: When an SNR corresponding to a first OWC transceiver unit does not support a maximum transmission rate of the first OWC transceiver unit, and a difference between the SNR corresponding to the first OWC transceiver unit and an SNR corresponding to a second OWC transceiver unit is greater than a first threshold, the OWC control unit determines that the first OWC transceiver unit is the OWC transceiver unit to send the OWC downlink data to the terminal device.

The second OWC transceiver unit is an OWC transceiver unit corresponding to an SNR other than a largest SNR in the plurality of SNRs. The first threshold is preset, and the first threshold may be infinite.

It may be understood that, that the difference between the SNR corresponding to the first OWC transceiver unit and the SNR corresponding to the second OWC transceiver unit is greater than the first threshold may mean that the SNR corresponding to the first OWC transceiver unit is far greater than any another SNR. In other words, when an OWC transceiver unit corresponding to the largest SNR in the plurality of SNRs does not support the maximum transmission rate of the OWC transceiver unit, and the SNR corresponding to the first OWC transceiver unit is far greater than another SNR, the OWC control unit still determines the first OWC transceiver unit as the OWC transceiver unit that sends the OWC downlink data to the terminal device.

It can be learned that, in this manner, the OWC control unit still selects one of the plurality of OWC transceiver units as the OWC transceiver unit to send the downlink data to the terminal device. This can also reduce interference generated when the plurality of OWC transceiver units simultaneously send the downlink data to the terminal device.

Implementation 3: When an SNR corresponding to a first OWC transceiver unit does not support a maximum transmission rate of the first OWC transceiver unit, a difference between the SNR corresponding to the first OWC transceiver unit and an SNR corresponding to a second OWC transceiver unit is less than or equal to a first threshold, and the OWC control unit determines, based on load information of a plurality of OWC transceiver units at a current moment, that simultaneous transmission of the second OWC transceiver unit and the first OWC transceiver unit causes interference to another terminal device, the OWC control unit determines that the first OWC transceiver unit is the OWC transceiver unit to send the OWC downlink data to the terminal device.

It may be understood that, when an OWC transceiver unit corresponding to a largest SNR in the plurality of SNRs does not support a maximum transmission rate of the OWC transceiver unit, the largest SNR is not far greater than another SNR, and the OWC control unit determines, based on information about whether the plurality of OWC transceiver units are sending or are to send the downlink data at the current moment, that simultaneous transmission of the first OWC transceiver unit and any one of the plurality of OWC transceiver units causes interference to another terminal device other than the terminal device, the OWC control unit determines the first OWC transceiver unit as the OWC transceiver unit that sends the downlink data to the terminal device.

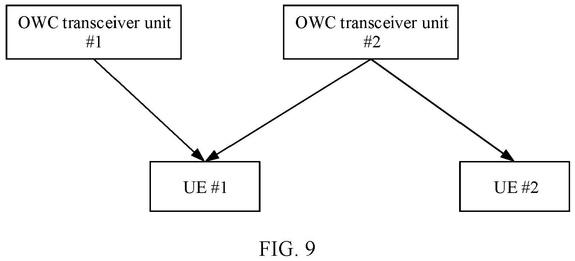

It may be understood that, that the OWC control unit determines that simultaneous transmission of the first OWC transceiver unit and any one of the plurality of OWC transceiver units causes interference to the another terminal device other than the terminal device means that the any one OWC transceiver unit and the first OWC transceiver unit simultaneously send the downlink data to a terminal device #1, and the any one OWC transceiver unit further simultaneously sends the downlink data to a terminal device #2, and then, when the any one OWC transceiver unit and the first OWC transceiver unit simultaneously send the downlink data to the terminal device #1, interference is caused to the terminal device #2. For example, as shown in FIG. 9, the first OWC transceiver unit is the OWC transceiver unit #1. The OWC transceiver unit #1 may serve UE #1, and the OWC transceiver unit #2 may serve the UE #1 and UE #2. The OWC control unit determines, based on load information of both the OWC transceiver unit #1 and the OWC transceiver unit #2 at a current moment, that when the OWC transceiver unit #1 and the OWC transceiver unit #2 simultaneously send the downlink data to the UE #1 at a moment t0, the OWC transceiver unit #2 also sends the downlink data to the UE #2 at the moment t0. In this case, when the OWC transceiver unit #1 and the OWC transceiver unit #2 simultaneously perform transmission to the UE #1, interference is caused to the UE #2.

It can be learned that in this manner, when simultaneous transmission of the any one of the plurality of OWC transceiver units and the first OWC transceiver unit causes the interference to the another terminal device other than the terminal device, the OWC control unit determines the first OWC transceiver unit as the OWC transceiver unit that sends the downlink data to the terminal device, to prevent interference. Therefore, this reduces interference caused when the plurality of OWC transceiver units simultaneously send the downlink data to the terminal device, and further improves communication performance between the OWC transceiver units and the terminal device.

Implementation 4: When an SNR corresponding to a first OWC transceiver unit does not support a maximum transmission rate of the first OWC transceiver unit, a difference between the SNR corresponding to the first OWC transceiver unit and an SNR corresponding to a second OWC transceiver unit is less than or equal to a first threshold, and simultaneous transmission of the first OWC transceiver unit and a third OWC transceiver unit causes no interference to another terminal device other than the terminal device, the OWC control unit determines the first OWC transceiver unit and the third OWC transceiver unit as OWC transceiver units that sends the OWC downlink data to the terminal device.

The third OWC transceiver unit is an OWC transceiver unit corresponding to some SNRs other than a largest SNR in the plurality of SNRs.

It may be understood that, when the largest SNR in the plurality of SNRs does not support the maximum transmission rate of the first OWC transceiver unit corresponding to the largest SNR, the largest SNR is not far greater than another SNR in the plurality of SNRs, and simultaneous transmission of the first OWC transceiver unit and the third OWC transceiver unit that is present in OWC transceiver units corresponding to the SNRs other than the largest SNR in the plurality of SNRs causes no interference to another terminal device other than the terminal device, the OWC control unit determines the first OWC transceiver unit and the third OWC transceiver unit as the OWC transceiver units that send the downlink data to the terminal device.

It can be learned that when the first OWC transceiver unit and the third OWC transceiver unit simultaneously send the downlink data to the terminal device, no interference is caused to the another terminal device. Therefore, this manner can reduce interference between a plurality of OWC cells. In addition, the plurality of OWC transceiver units simultaneously send the downlink data to the terminal device, so that a communication rate can be improved.

S104: The second network device sends the downlink data by using the first network device.

It may be understood that the OWC control unit sends the downlink data to the terminal device by using the determined OWC transceiver unit.

In an optional implementation, the OWC transceiver unit that is determined by the OWC control unit to send the downlink data to the terminal device is one OWC transceiver unit, then the OWC control unit controls the determined OWC transceiver unit to send the downlink data to the terminal device at a maximum transmission rate supported by the OWC transceiver unit.

In another optional implementation, the OWC transceiver unit that is determined by the OWC control unit to send the downlink data to the terminal device is a plurality of OWC transceiver units, then the OWC control unit controls each OWC transceiver unit to send the downlink data to the terminal device at a maximum transmission rate supported by the OWC transceiver unit.

For example, the OWC transceiver unit that is determined by the OWC control unit to send the downlink data to the terminal device includes the OWC transceiver unit #1, the OWC transceiver unit #2, and the OWC transceiver unit #3, then the OWC control unit controls the OWC transceiver unit #1 to send the downlink data to the terminal device at a maximum transmission rate supported by the OWC transceiver unit #1, and controls the OWC transceiver unit #2 to send the downlink data to the terminal device at a maximum transmission rate supported by the OWC transceiver unit #2, control the OWC transceiver unit #3 to send the downlink data to the terminal device at a maximum transmission rate supported by the OWC transceiver unit #3.

In an optional implementation, that the second network device sends the downlink data by using the first network device includes: when determining based on a maximum transmission rate supported by the first network device, to perform downlink transmission by using an OWC, sending the downlink data by using the first network device.

It may be understood that, after determining the OWC transceiver unit to send the downlink data to the terminal device, the OWC control unit sends, to the radio access device, the maximum transmission rate supported by the OWC transceiver unit, and the radio access device determines, based on a transmission rate supported by the radio access device and the maximum transmission rate supported by the OWC transceiver unit, whether to use the OWC for downlink transmission. When the transmission rate supported by the radio access device is less than the maximum transmission rate supported by the OWC transceiver unit, the radio access device determines to use the OWC for downlink transmission, and the radio access device sends the downlink data to the OWC control unit. Then, after obtaining the downlink data from the radio access device, the OWC control unit processes the downlink data, for example, encapsulates an OWC header into the downlink data, and then controls the determined OWC transceiver unit to send downlink data to the terminal device at the maximum transmission rate supported by the OWC transceiver unit.

Optionally, when the transmission rate supported by the radio access device is greater than or equal to the maximum transmission rate supported by the OWC transceiver unit, the radio access device determines not to use the OWC for downlink transmission, that is, the radio access device still sends the downlink data to the terminal device through radio.

S105: The terminal device obtains the downlink data.

It may be understood that the terminal device receives the downlink data from the OWC transceiver unit, or the terminal device obtains the downlink data from the OWC transceiver unit through the relay node.

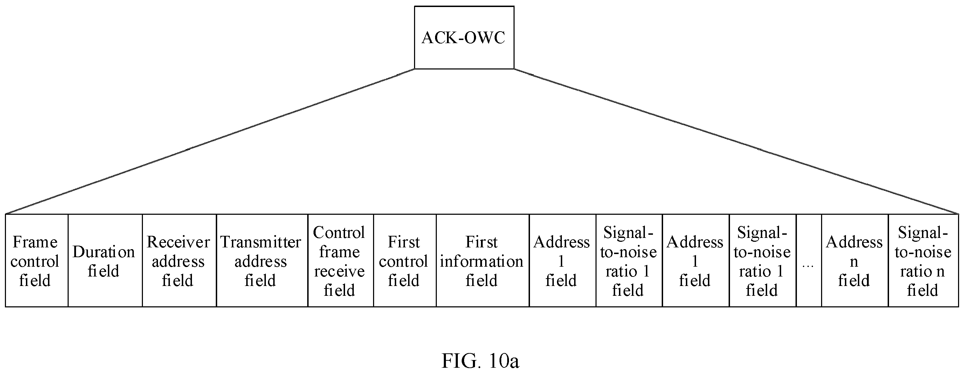

In an optional implementation, when the downlink data includes one data block, after obtaining the downlink data, the terminal device sends an acknowledgment-optical wireless communication ACK-OWC (Acknowledge-OWC) frame, so that the second network device obtains the BlockACK-OWC frame. The ACK-OWC frame is shown in FIG. 10a. The ACK-OWC frame includes a first control (first BA control) field and a first information (first BA information) field. The first control field indicates an identifier of the downlink data, and the first information field indicates the downlink data.

In other words, when the terminal device correctly obtains the downlink data including one data block from the OWC transceiver unit, the terminal device feeds back, to the second network device by using the ACK-OWC frame, correct reception of the downlink data, so that the second network device does not need to resend the downlink data.

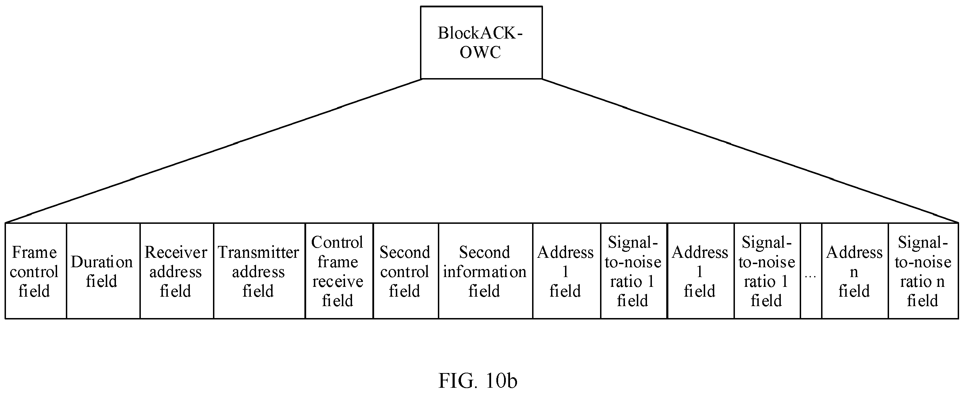

In another optional implementation, the downlink data includes a plurality of data blocks. After obtaining the downlink data, the terminal device sends a block acknowledgment-optical wireless communication BlockACK-OWC frame, so that the second network device obtains the BlockACK-OWC frame from the terminal device. The BlockACK-OWC frame is shown in FIG. 10b. The BlockACK-OWC frame includes a second control (second BA control) field and a second information (second BA information) field. The second control field indicates an identifier of each data block in the downlink data, and the second information field indicates each data block in the downlink data.

In other words, when the terminal device correctly obtains the downlink data including the plurality of data blocks, the terminal device feeds back, to the second network device by using the BlockACK-OWC frame, correct reception of the downlink data. Compared with a manner in which the terminal device feeds back, to the network device by using acknowledgment information after receiving one data block, correct reception of the data block, this manner can reduce a probability of a network collision caused by feeding back a plurality of pieces of acknowledgment information. This avoids unnecessary retransmission of some downlink data.

In still another optional implementation, the ACK-OWC frame or the BlockACK-OWC frame further includes n address fields and n signal-to-noise ratio fields. An address i field indicates an address of the OWC transceiver unit i, and a signal-to-noise ratio i field indicates an SNR corresponding to the OWC transceiver unit i. For formats of the n address fields and the n signal-to-noise ratio fields, refer to the formats shown in FIG. 10a and FIG. 10b. This is not limited.

That is, when feeding back correct reception of the downlink data to the OWC control unit, the terminal device further feeds back, to the OWC control unit, a change in coverage information of an OWC cell in which the terminal device is located, so that the OWC control unit can learn of the change in the coverage information of the OWC cell caused by movement of the terminal device in a continuous downlink data transmission scenario. Therefore, the OWC control unit may perform movement management on the terminal device based on the change, to maintain continuity of communication between the terminal device and the OWC control unit.

As shown in FIG. 10a and FIG. 10b, each of the ACK-OWC frame and the BlockACK-OWC frame further include a frame control (Frame Control) field, a duration (Duration) field, a receiver address (Receiver Address) field, a transmitter address (transmitter address) field, and a control frame receive (FCS) field.

In an optional implementation, when receiving the ACK-OWC frame or the BlockACK-OWC frame, the second network device (the OWC control unit) clears a timer corresponding to a downlink data block indicated in the ACK-OWC frame or the BlockACK-OWC frame. If the OWC control unit does not receive an ACK-OWC frame or a BlockACK-OWC frame indicating correct reception of a data block before timers of some data blocks stop timing, the OWC control unit controls an OWC transceiver unit that fails to send the data block to resend the data block.

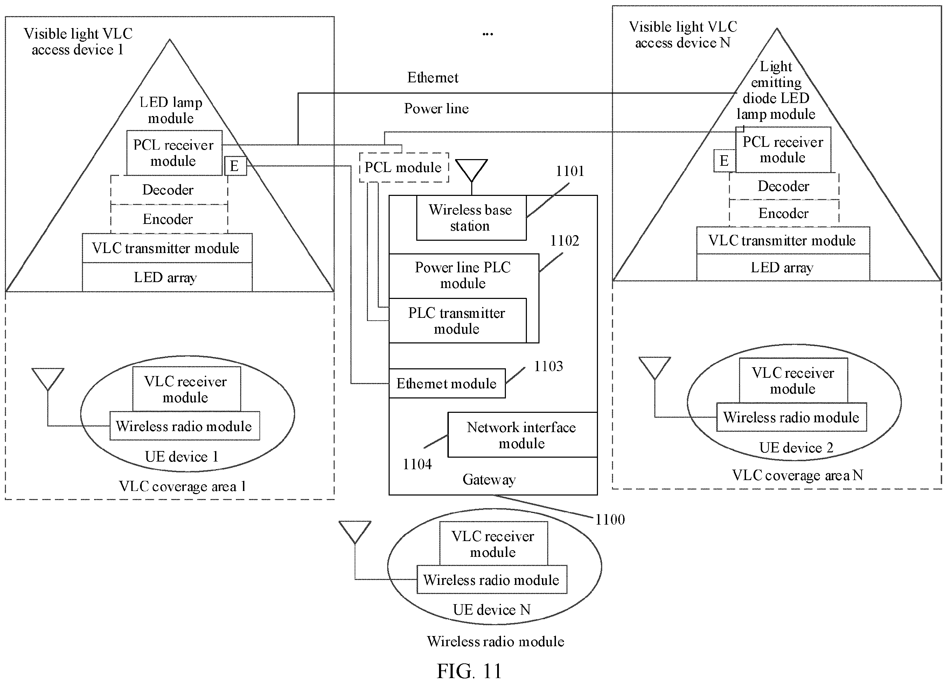

FIG. 11 shows a currently designed gateway 1100. The gateway includes a wireless base station 1101, a power line communication (power line communication, PLC) module 1102, an Ethernet module 1103, and a network interface module 1104. The gateway is connected to a VLC access device via a wired cable, and configures the VLC access device as a supplementary wireless cellular cell for downlink communication. The terminal device receives a VLC downlink, and sends an acknowledgment message through a radio channel.

In the gateway shown in FIG. 11, a VLC communication scenario with a single light source is mainly considered, and cell interference generated in a multi-VLC coverage scenario is rarely related. In addition, a conventional acknowledgment message feedback mechanism of downlink data is used in a current visible light communication method. A collision may occur in a radio network, affecting network performance. As a result, unnecessary retransmission of some data occurs in VLC.

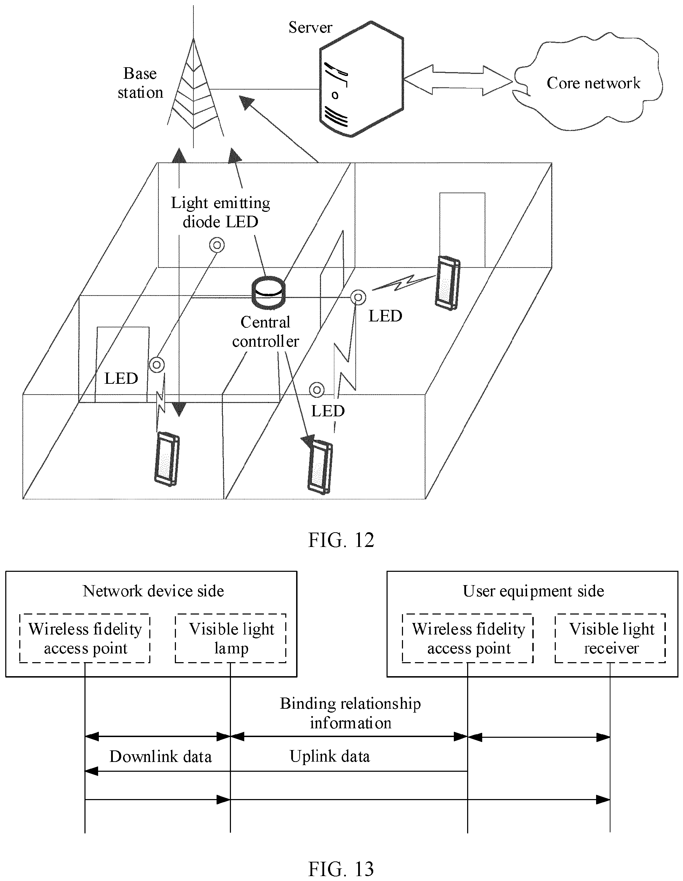

In addition, currently, a VLC communication system shown in FIG. 12 is further proposed. The communication system integrates a radio frequency/LTE/Wi-Fi system and a visible light communication system. As shown in FIG. 12, there is a central controller (central controller) in an adjacent area. During downlink transmission, a base station communicates, by using the central controller, data from a server with an LED indicator and a terminal device in each area. During uplink communication, the terminal device directly performs radio frequency/LTE/Wi-Fi communication with the base station.

Currently, a dual-mode terminal device and network device shown in FIG. 13 are further provided. To be specific, the network device includes a Wireless Fidelity (Wi-Fi) access point and a visible light indicator, the terminal device includes a Wi-Fi access point and a visible light receiver, and the visible light indicator of the network device has a binding relationship with the Wi-Fi access point of the terminal device. In this case, the visible light indicator of the network device side may perform downlink visible light communication with the bound visible light receiver of the user equipment side, and the wireless fidelity access point of the user equipment side may perform uplink radio communication with the bound wireless fidelity access point on the network device side.

It can be learned that none of the VLC communication systems shown in FIG. 11, FIG. 12, and FIG. 13 relates to inter-cell interference in a multi-light source coverage scenario. Therefore, compared with the VLC communication systems shown in FIG. 11, FIG. 12, and FIG. 13, this embodiment of this application selects the first network device to send the downlink data to the terminal device based on an SNR of an optical wireless signal sent by each network device. Therefore, in a multi-light source coverage scenario, the selected first network device suffers relatively less inter-cell interference when sending the downlink data. This further helps improve communication performance.

### 3. Optical wireless communication method 200

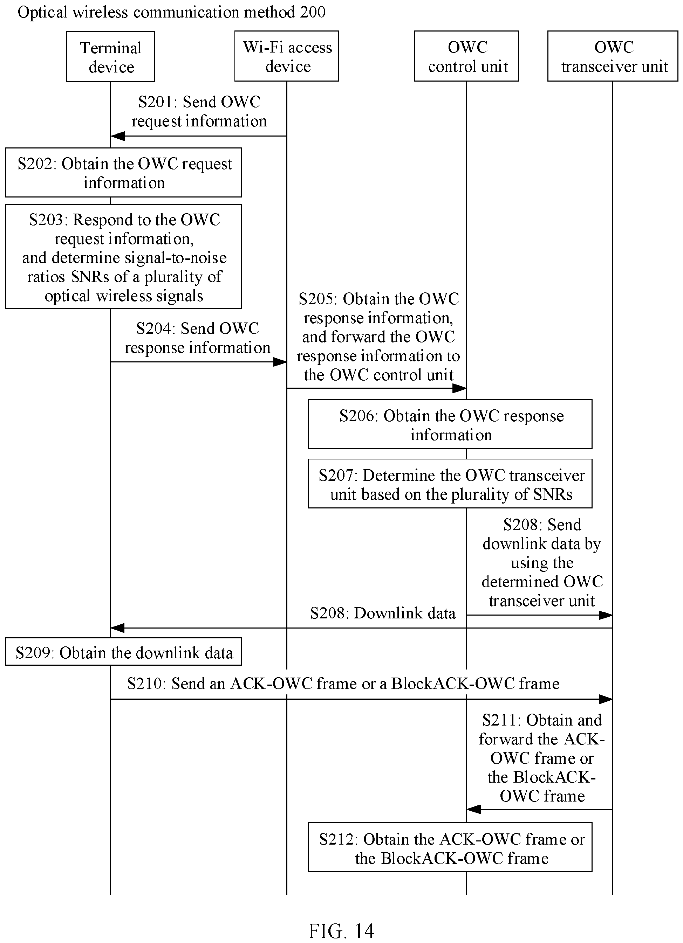

An embodiment of this application provides an optical wireless communication method 200 shown in FIG. 14 based on the communication system 200 shown in FIG. 2. The method uses an example in which a radio access device in the communication system 200 is a Wi-Fi access device. The optical wireless communication method 200 includes but is not limited to:
S201: A Wi-Fi access device sends OWC request information to a terminal device, where the OWC request information is used to request the terminal device to enable a wireless light receiving function.

The OWC request information is carried in an OWC request frame (RTS-OWC frame). The OWC request frame is described above, and details are not described again. The terminal device has a radio frequency receiving function, a radio frequency sending function, and a wireless light receiving function.

It may be understood that the Wi-Fi access device sends the OWC request information to the terminal device through radio.

S202: The terminal device obtains the OWC request information from the Wi-Fi access device.

The terminal device receives the OWC request information from the Wi-Fi access device, or the terminal device obtains the OWC request information from the Wi-Fi access device through a relay node.

S203: The terminal device responds to the OWC request information, and determines signal-to-noise ratios SNRs of a plurality of optical wireless signals.

It may be understood that, that the terminal device responds to the OWC request information means that the terminal device enables a wireless light receiving function, obtains the optical wireless signals from a plurality of OWC transceiver units, and determines the SNRs of the plurality of optical wireless signals.

As described in S101, the optical wireless signals are optical wireless signals that are periodically sent by the OWC transceiver units to the terminal device under control of an OWC control unit. Details are not described again.

An implementation in which the terminal device determines the SNRs of the plurality of optical wireless signals is the same as the implementation in S 101. Details are not described again.

S204: The terminal device sends OWC response information to the Wi-Fi access device, where the OWC response information includes the plurality of SNRs.

The OWC response information is carried in an OWC announcement frame (a CTS-OWC frame). The OWC announcement frame is described in S101, and details are not described again.

S205: The Wi-Fi access device obtains the OWC response information from the terminal device, and forwards the OWC response information to the OWC control unit.

It may be understood that, after obtaining the OWC response information from the terminal device, the Wi-Fi access device forwards the OWC response information to the OWC control unit via a wired cable.

S206: The OWC control unit obtains the OWC response information from the Wi-Fi access device.

S207: The OWC control unit determines an OWC transceiver unit based on the plurality of SNRs.

The OWC control unit has a function of decoding the CTS-OWC frame, extracts address information and SNR information of the OWC transceiver unit in the CTS-OWC frame, stores or updates the address information and the SNR information in a local memory, and then determines, based on the plurality of SNRs, the OWC transceiver unit to send downlink data to the terminal device.

An implementation of S207 is the same as that in S103 in which the network device determines the OWC transceiver unit based on the plurality of SNRs. Details are not described again.

S208: The OWC control unit sends downlink data by using the determined OWC transceiver unit.

In an optional implementation, an implementation in which the OWC control unit sends the downlink data by using the determined OWC transceiver unit is similar to S104. Details are not described again.

In another optional implementation, the OWC control unit sends a determined maximum transmission rate supported by the OWC transceiver unit to the Wi-Fi access device. The Wi-Fi access device determines, based on the maximum transmission rate supported by the OWC transceiver unit, whether to use OWC for downlink communication. When determining to use the OWC for downlink transmission, the Wi-Fi access device sends the downlink data to the OWC control unit. The OWC control unit controls the determined OWC transceiver unit to send the downlink data to the terminal device at the maximum transmission rate supported by the OWC transceiver unit.

S209: The terminal device obtains the downlink data from the OWC transceiver unit.

S210: The terminal device sends an ACK-OWC frame or a BlockACK-OWC frame to a first OWC transceiver unit.

The first OWC transceiver unit is an OWC transceiver unit corresponding to a largest SNR in the plurality of SNRs. In other words, the terminal device feeds back the ACK-OWC frame or the BlockACK-OWC frame to the OWC control unit by using the OWC transceiver unit with best signal quality.

S211: The first OWC transceiver unit obtains the ACK-OWC frame or the BlockACK-OWC frame from the terminal device, and forwards the ACK-OWC frame or the BlockACK-OWC frame to the OWC control unit.

S212: The OWC control unit obtains the ACK-OWC frame or the BlockACK-OWC frame from the first OWC transceiver unit.

Implementations of the ACK-OWC frame and the BlockACK-OWC frame are the same as those of the ACK-OWC frame and the BlockACK-OWC frame in the optical wireless communication method 100. Details are not described again.

In this embodiment of this application, the terminal device performs uplink communication with the Wi-Fi access device through radio frequency, and the OWC control unit performs downlink optical wireless communication with the terminal device by using the determined OWC transceiver unit. The OWC transceiver unit to send the downlink data to the terminal device is also determined based on the plurality of SNRs fed back by the terminal device. Therefore, in a multi-light source coverage scenario, the selected network device suffers relatively less inter-cell interference when sending the downlink data. This further helps improve communication performance.

### 4. Optical wireless communication method 300

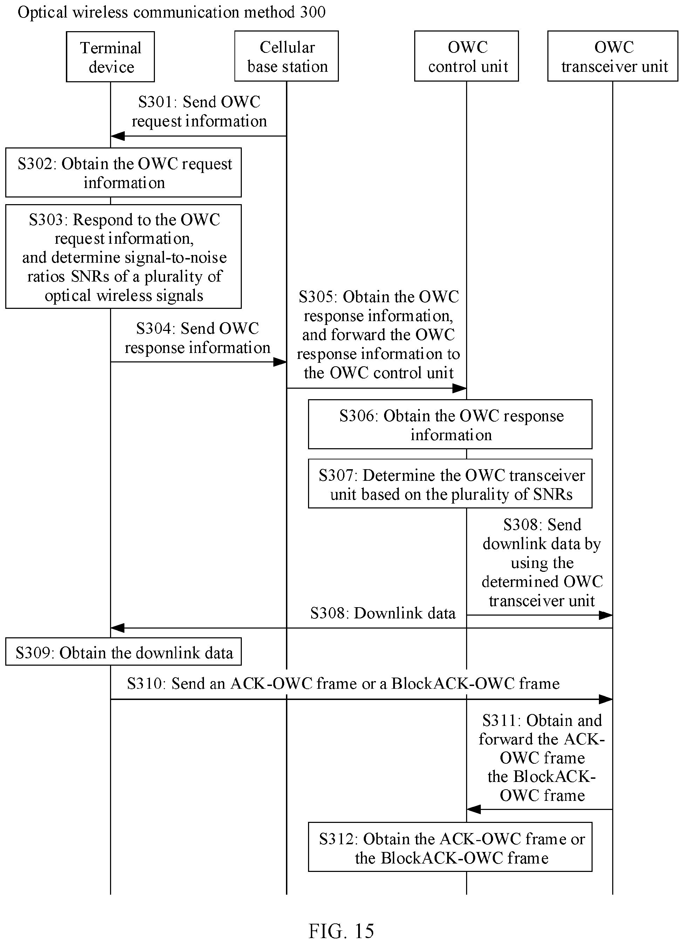

An embodiment of this application further provides an optical wireless communication method 300 shown in FIG. 15 based on the communication system 200 shown in FIG. 2. The method uses an example in which a radio access device in the communication system 200 is a cellular base station. The optical wireless communication method 300 includes but is not limited to:

S301: A cellular base station sends OWC request information to a terminal device, where the OWC request information is used to request the terminal device to enable a wireless light receiving function.

The OWC request information is carried on a physical downlink control channel PDCCH, that is, the cellular base station sends the OWC request information to the terminal device through the PDCCH. The terminal device has a radio frequency receiving function, a radio frequency sending function, and a wireless light receiving function.

S302: The terminal device obtains the OWC request information from the cellular base station.

S303: The terminal device responds to the OWC request information, and determines signal-to-noise ratios SNRs of a plurality of optical wireless signals.

An implementation of S303 is the same as that of S203, and details are not described again.

S304: The terminal device sends OWC response information to the cellular base station, where the OWC response information includes the plurality of SNRs.

S305: The cellular base station obtains the OWC response information from the terminal device, and forwards the OWC response information to an OWC control unit.

It may be understood that, after obtaining the OWC response information from the terminal device, the cellular base station forwards the OWC response information to the OWC control unit via a wired cable.

S306. The OWC control unit obtains the OWC response information from the cellular base station.

S307: The OWC control unit determines an OWC transceiver unit based on the plurality of SNRs.

An implementation of S307 is the same as an implementation of S207, and details are not described again.

S308: The OWC control unit sends downlink data by using the determined OWC transceiver unit.

In an optional implementation, an implementation in which the OWC control unit sends the downlink data by using the determined OWC transceiver unit is similar to S104. Details are not described again.

In another optional implementation, the OWC control unit sends a determined maximum transmission rate separately supported by the determined OWC transceiver unit to the cellular base station, and the cellular base station determines, based on the maximum transmission rate supported by the OWC transceiver unit, whether to use OWC for downlink communication. When determining to use the OWC for downlink transmission, the cellular base station sends the downlink data to the OWC control unit, and the OWC control unit controls the determined OWC transceiver unit to send the downlink data to the terminal device at the maximum transmission rate supported by the OWC transceiver unit.

S309: The terminal device obtains the downlink data from the OWC transceiver unit.

S310: The terminal device sends an ACK-OWC frame or a BlockACK-OWC frame to a first OWC transceiver unit.

The first OWC transceiver unit is an OWC transceiver unit corresponding to a largest SNR in the plurality of SNRs. In other words, the terminal device feeds back the ACK-OWC frame or the BlockACK-OWC frame to the OWC control unit by using the OWC transceiver unit with best signal quality.

S311: The first OWC transceiver unit obtains the ACK-OWC frame or the BlockACK-OWC frame from the terminal device, and forwards the ACK-OWC frame or the BlockACK-OWC frame to the OWC control unit.

S312: The OWC control unit obtains the ACK-OWC frame or the BlockACK-OWC frame from the first OWC transceiver unit.

Implementations of the ACK-OWC frame and the BlockACK-OWC frame are the same as those of the ACK-OWC frame and the BlockACK-OWC frame in the optical wireless communication method 100. Details are not described again.

It can be learned that, a difference between the optical wireless communication method 300 and the optical wireless communication method 200 lies in that the cellular base station sends the OWC request information to the terminal device through the PDCCH, and the terminal device feeds back the OWC response information to the cellular base station through the PUCCH. However, the OWC transceiver unit to send the downlink data to the terminal device is still determined based on the plurality of SNRs fed back by the terminal device. Therefore, this can also reduce inter-cell interference in a multi-light source coverage scenario.

### 5. Optical wireless communication method 400

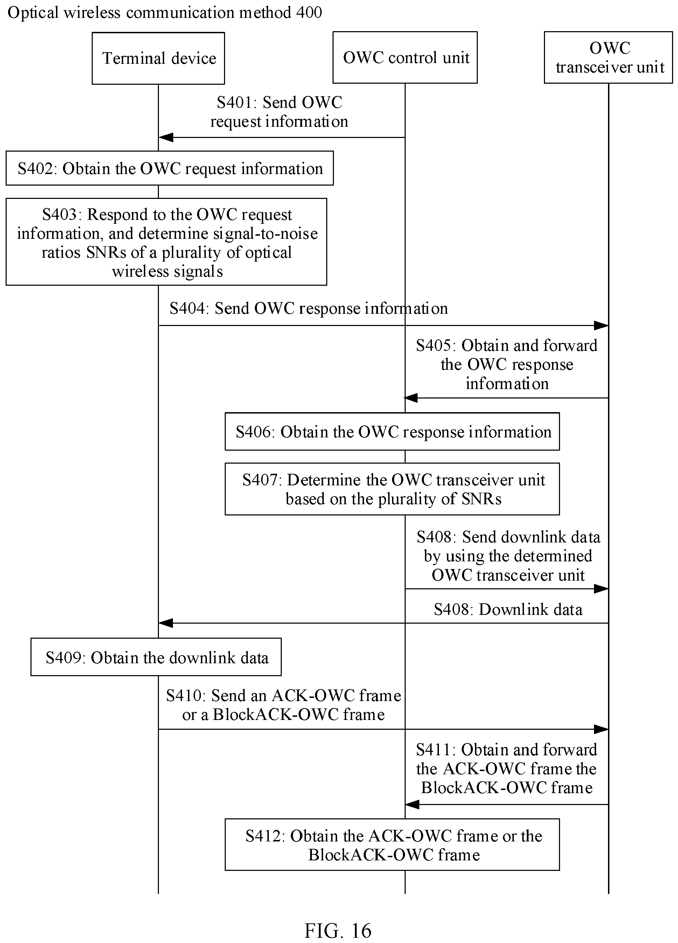

An embodiment of this application further provides an optical wireless communication method 400 shown in FIG. 16 based on the communication system 300 shown in FIG. 3. The optical wireless communication method 400 includes but is not limited to:

S401: An OWC control unit sends OWC request information to a terminal device, where the OWC request information is used to request the terminal device to enable a wireless light transceiver function.

The terminal device has the wireless light transceiver function. The OWC request information is carried in an OWC request frame. The OWC request frame is described above, and details are not described again.

It may be understood that the OWC control unit sends the OWC request information to the terminal device by using any OWC transceiver unit. In an optional implementation, the OWC control unit sequentially controls, based on a time sequence, one OWC transceiver unit to send the OWC request information to the terminal device. For example, the OWC transceiver unit managed by the OWC control unit includes an OWC transceiver unit #1, an OWC transceiver unit #2, and an OWC transceiver unit #3, and a preset time period is t. The OWC control unit first controls the OWC transceiver unit #1 to send the OWC request information to the terminal device. If the OWC control unit does not obtain the OWC response information from the terminal device in the time period t, the OWC control unit continues to control the OWC transceiver unit #2 to send the OWC request information to the terminal device. If the OWC control unit obtains the OWC response information from the terminal device in the time period t, the OWC control unit no longer controls the OWC transceiver unit #3 to send the OWC request information to the terminal device.

S402: The terminal device obtains the OWC request information.

S403: The terminal device responds to the OWC request information, and determines SNRs of a plurality of optical wireless signals.

It may be understood that the terminal device enables the wireless light transceiver function, receives optical wireless signals from a plurality of OWC transceiver units, and determines the SNRs of the plurality of optical wireless signals.

S404: The terminal device sends OWC response information to a first OWC transceiver unit, where the OWC response information includes the plurality of SNRs.

The first OWC transceiver unit is an OWC transceiver unit corresponding to a largest SNR in the plurality of SNRs. In other words, the terminal device feeds back the OWC response information to the OWC control unit by using the OWC transceiver unit with best signal quality, to ensure that the OWC response information is correctly fed back.

Optionally, the terminal device may feed back the OWC response information to the OWC control unit by using any one of the plurality of OWC transceiver units corresponding to the plurality of SNRs.

It may be understood that the terminal device sends the OWC response information to the OWC transceiver unit by using an optical transmitter. The OWC response information is carried in an OWC announcement frame. The OWC announcement frame is described above, and details are not described again.

S405: The first OWC transceiver unit obtains the OWC response information from the terminal device, and forwards the OWC response information to the OWC control unit.

It may be understood that, after obtaining the OWC response information from the terminal device, the first OWC transceiver unit sends the OWC response information to the OWC control unit via a wired cable.

S406: The OWC control unit obtains the OWC response information from the OWC transceiver unit.

S407: The OWC control unit determines, based on the plurality of SNRs, an OWC transceiver unit to send downlink data to the terminal device.

An implementation of S407 is the same as an implementation of S103, and details are not described again.

S408: The OWC control unit controls the determined OWC transceiver unit to send the downlink data to the terminal device at a maximum transmission rate supported by the OWC transceiver unit.

S409: The terminal device obtains the downlink data from the OWC transceiver unit.

S410: The terminal device sends an ACK-OWC frame or a BlockACK-OWC frame to a first OWC transceiver unit.

It may be understood that, if the terminal device receives downlink data from the plurality of OWC transceiver units, the terminal device may feed back a plurality of ACK-OWC frames or BlockACK-OWC frames to the OWC control unit by using the first OWC transceiver unit. In other words, the terminal device feeds back, to the OWC control unit by using the first OWC transceiver unit with the best communication quality, information about correct reception of a plurality of pieces of data.

Optionally, the terminal device feeds back, to the OWC control unit by using any one of the plurality of OWC transceiver units, correct reception of one or more pieces of downlink data.

S411: The first OWC transceiver unit obtains the ACK-OWC frame or the BlockACK-OWC frame from the terminal device, and forwards the ACK-OWC frame or the BlockACK-OWC frame to the OWC control unit.

S412: The OWC control unit obtains the ACK-OWC frame or the BlockACK-OWC frame from the first OWC transceiver unit.

Implementations of the ACK-OWC frame and the BlockACK-OWC frame are the same as those of the ACK-OWC frame and the BlockACK-OWC frame in the optical wireless communication method 100. Details are not described again.

It can be learned that, a difference between the optical wireless communication method 400 and the optical wireless communication method 200 and the optical wireless communication method 300 lies in that the OWC control unit performs downlink optical wireless communication with the terminal device by using the OWC transceiver unit, and the terminal device performs uplink optical wireless communication with the OWC control unit by using the OWC transceiver unit, that is, all-optical communication is performed between the OWC control unit and the terminal device. The OWC transceiver unit to send the downlink data to the terminal device is still determined based on the plurality of SNRs fed back by the terminal device. Therefore, this can also reduce inter-cell interference in a multi-light source coverage scenario.

### 6. Communication apparatus

To implement functions in the method provided in the foregoing embodiment of this application, the terminal device or the network device may include a hardware structure and/or a software module, to implement the foregoing functions by using the hardware structure, the software module, or both the hardware structure and the software module. Whether a specific function in the foregoing functions is implemented in a form of the hardware structure, the software module, or both the hardware structure and the software module depends on specific application and a design constraint condition of the technical solution.

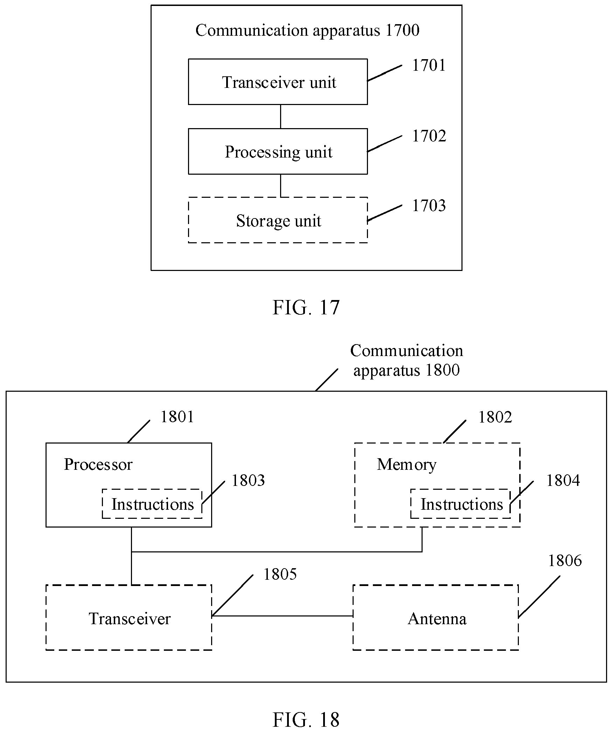

As shown in FIG. 17, an embodiment of this application provides a communication apparatus 1700. The communication apparatus 1700 may be a component (for example, an integrated circuit or a chip) of a terminal device, or may be a component (for example, an integrated circuit or a chip) of a network device. The communication apparatus 1700 may include a transceiver unit 1701 and a processing unit 1702. Optionally, the communication apparatus may further include a storage unit 1703.

In a possible design, one or more modules in FIG. 17 may be implemented by one or more processors, implemented by one or more processors and memories, implemented by one or more processors and transceivers, or implemented by one or more processors, memories, and transceivers. This is not limited in embodiments of this application. The processor, the memory, and the transceiver may be separately disposed, or may be integrated.

The communication apparatus 1700 can implement functions of the terminal device described in embodiments of this application. Optionally, the communication apparatus 1700 can implement functions of the network device described in embodiments of this application. For example, the communication apparatus 1700 includes a module, a unit, or a means (means) corresponding to steps performed by the terminal device described in embodiments of this application. The module , the unit, or the means (means) may be implemented by software, by hardware, by hardware executing corresponding software, or by a combination of software and hardware. For details, further refer to the corresponding descriptions in the foregoing corresponding method embodiment.

In a possible design, the communication apparatus 1700 may include:
a transceiver unit 1701, configured to send optical wireless communication OWC response information, where the OWC response information includes a plurality of signal-to-noise ratios SNRs, the plurality of SNRs are obtained by a processing unit by measuring a plurality of optical wireless signals; and the plurality of SNRs are used to determine a first network device to send downlink data to the processing unit.

The transceiver unit 1701 is further configured to obtain the downlink data.

In an optional implementation, the OWC response information is carried in an OWC announcement frame, the OWC announcement frame includes n address fields and n signal-to-noise ratio fields. An address i field indicates an address of a first network device i, and a signal-to-noise ratio i field indicates an SNR corresponding to the first network device i. i is an integer greater than or equal to 1 and less than or equal to n, and n is an integer greater than or equal to 1.

In an optional implementation, the OWC announcement frame further includes an SNR radio access field, and the SNR radio access field indicates an SNR of a radio signal received by the terminal device.

In another optional implementation, the OWC response information is carried on a physical uplink control channel.

In an optional implementation, the transceiver unit 1701 is further configured to: send an acknowledgment-optical wireless communication ACK-OWC frame, where the ACK-OWC frame includes a first control field and a first information field, the first control field indicates an identifier of the downlink data, and the first information field indicates the downlink data; or send a block acknowledgment-optical wireless communication BlockACK-OWC frame, where the BlockACK-OWC frame includes a second control field and a second information field, the second control field indicates an identifier of each data block in the downlink data, and the second information field indicates each data block in the downlink data.

In an optional implementation, before sending the optical wireless communication OWC response information, the transceiver unit 1701 is further configured to obtain optical wireless communication OWC request information, where the OWC request information is used to request the terminal device to enable a wireless light receiving function. The processing unit 1702 is configured to: respond to the OWC request information, and determine the SNRs of the plurality of optical wireless signals.

In another optional implementation, the OWC request information is carried in an OWC request frame, or the OWC request information is carried on a physical downlink control channel.

This embodiment of this application and the foregoing method embodiment are based on a same concept, and bring same technical effect. For a specific principle, refer to the description of the foregoing embodiment. Details are not described again.

In another possible design, the communication apparatus 1700 may include:
a processing unit 1702, configured to obtain optical wireless communication OWC response information, where the OWC response information includes a plurality of signal-to-noise ratios SNRs, and the plurality of SNRs are obtained by measuring a plurality of optical wireless signals.

The processing unit 1702 is further configured to determine, based on the plurality of SNRs, a first network device to send downlink data.

The processing unit 1702 is further configured to send the downlink data by using the first network device.

In an optional implementation, when sending the downlink data by using the first network device, the processing unit 1702 is specifically configured to: when determining based on a maximum transmission rate supported by the first network device, to perform downlink transmission by using an OWC, send the downlink data by using the first network device.

In an optional implementation, when determining, based on the plurality of SNRs, the first network device to send the downlink data, the processing unit 1702 is specifically configured to: determine, based on the plurality of SNRs and load information of a plurality of first network devices corresponding to the plurality of SNRs, the first network device to send the downlink data, where the load information is information that indicates a terminal device served by the first network device at a current moment or a preset time period.

In an optional implementation, the OWC response information is carried in an OWC announcement frame, the OWC announcement frame includes n address fields and n signal-to-noise ratio fields. An address i field indicates an address of a first network device i, and a signal-to-noise ratio i field indicates an SNR corresponding to the first network device i. i is an integer greater than or equal to 1 and less than or equal to n, and n is an integer greater than or equal to 1.

In an optional implementation, the OWC announcement frame further includes an SNR radio access field, and the SNR radio access field indicates an SNR of a radio signal received by the terminal device.

In an optional implementation, the OWC response information is carried on a physical uplink control channel PUCCH.

In an optional implementation, the transceiver unit 1701 is further configured to obtain an acknowledgment-optical wireless communication ACK-OWC frame, where the ACK-OWC frame includes a first control field and a first information field, the first control field indicates an identifier of the downlink data, and the first information field indicates the downlink data; or
obtain a block acknowledgment-optical wireless communication BlockACK-OWC frame, where the BlockACK-OWC frame includes a second control field and a second information field, the second control field indicates an identifier of each data block in the downlink data, and the second information field indicates each data block in the downlink data.

In an optional implementation, before obtaining the optical wireless communication OWC response information, the transceiver unit 1701 is further configured to send optical wireless communication OWC request information. The OWC request information is used to request the terminal device to enable a wireless light receiving function.

In an optional implementation, the OWC request information is carried in an OWC request frame, or the OWC request information is carried on a physical downlink control channel.

This embodiment of this application and the foregoing method embodiment are based on a same concept, and bring same technical effect. For a specific principle, refer to the description of the foregoing embodiment. Details are not described again.

An embodiment of this application further provides a communication apparatus 1800 shown in FIG. 18. The communication apparatus 1800 includes one or more processors 1801. The processor 1801 may also be referred to as a processing unit, and may implement a specific control function. The processor 1801 may be a general-purpose processor, a dedicated processor, or the like. For example, the processor includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 1800, and execute a software program and/or process data. Different processors may be independent components, or may be integrated into one or more processors, for example, integrated into one or more application-specific integrated circuits.

Optionally, the communication apparatus 1800 includes one or more memories 1802, configured to store instructions 1804, and the instructions may be run on the processor, so that a terminal device or a network device performs the method described in the foregoing method embodiments. Optionally, the memory 1802 may further store data. The processor and the memory may be separately disposed, or may be integrated together.

Optionally, the communication apparatus 1800 may include instructions 1803 (which may also be referred to as code or a program sometimes), and the instructions 1803 may be run on the processor, so that the communication apparatus 1800 performs the method described in the foregoing embodiment. The processor 1801 may store data.

Optionally, the communication apparatus 1800 may further include a transceiver 1805 and an antenna 1806. The transceiver 1805 may be referred to as a transceiver unit, a transceiver, a transceiver circuit, a transceiver, an input/output interface, or the like, and is configured to implement a receiving/sending function of the communication apparatus 1800 by using the antenna 1806.

Optionally, the communication apparatus 1800 may further include one or more of the following components: a wireless communication module, an audio module, an external memory interface, an internal memory, a universal serial bus (universal serial bus, USB) port, a power management module, an antenna, a speaker, a microphone, an input/output module, a sensor module, a motor, a camera, a display, or the like. It can be understood that in some embodiments, the communication apparatus 1800 may include more or fewer components, or some components are integrated, or some components are split. These components may be implemented by hardware, software, or a combination of software and hardware.

The processor 1801 and the transceiver 1805 described in this application may be implemented on an integrated circuit (integrated circuit, IC), an analog IC, a radio frequency integrated circuit (radio frequency integrated circuit, RFID), a mixed-signal IC, an application-specific integrated circuit (application specific integrated circuit, ASIC), a printed circuit board (printed circuit board, PCB), an electronic device, or the like. The communication apparatus described in this specification may be an independent device (for example, an independent integrated circuit or a mobile phone), or may be a part of a relatively large device (for example, a module that can be embedded in another device). For details, refer to the foregoing descriptions of the terminal device and the network device. Details are not described herein again.

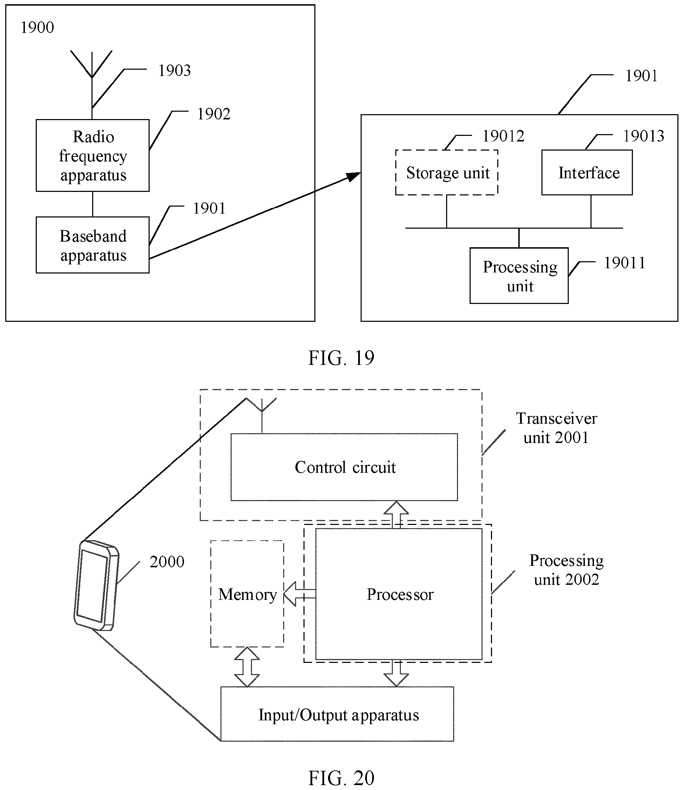

An embodiment of this application further provides a network device 1900 shown in FIG. 19. The network device 1900 includes a baseband apparatus 1901, a radio frequency apparatus 1902, and an antenna 1903. The baseband apparatus 1901 may include a processing unit 19011, a storage unit 19012, and an interface 19013. The baseband apparatus 1901 may be configured to process a communication protocol and communication data. The processing unit 19011 is configured to implement steps related to the second network device in the foregoing optical wireless communication method. The following is an example.

In a design, the processing unit 19011 is configured to: obtain optical wireless communication OWC response information, where the OWC response information includes a plurality of signal-to-noise ratios SNRs, the plurality of SNRs are obtained by measuring a plurality of optical wireless signals; determine, based on the plurality of SNRs, a first network device to send downlink data; and send the downlink data by using the first network device.

In this embodiment of this application, the network device 1900 may further perform the implementations of the communication apparatus 1700 and the communication apparatus 1800. A person skilled in the art may further understand that various illustrative logical blocks (illustrative logical blocks) and steps (steps) listed in embodiments of this application may be implemented through electronic hardware, computer software, or a combination thereof. Whether the functions are implemented by hardware or software depends on particular applications and a design requirement of the entire system. A person skilled in the art may use various methods to implement the described functions for each particular application, but it is not to be considered that the implementation goes beyond the scope of embodiments of this application.

FIG. 20 is a schematic diagram of a structure of a terminal device 2000 according to an embodiment of this application. The terminal device 2000 is applicable to the systems shown in FIG. 1, FIG. 2, and FIG. 3. For ease of description, FIG. 20 shows only main components of the terminal device 2000. As shown in FIG. 20, the terminal device 2000 includes a processor, a memory, a control circuit, an antenna, and an input/output apparatus. The processor is mainly configured to process a communication protocol and communication data, control the entire terminal device 2000, execute a software program, and process data of the software program. The memory is mainly configured to store a software program and data. The control circuit is mainly configured to implement conversion between a baseband signal and a radio frequency signal and process the radio frequency signal. The antenna is mainly configured to receive and send a radio frequency signal in a form of an electromagnetic wave. The input/output apparatus, for example, a touchscreen, a display screen, a microphone, or a keyboard, is mainly configured to receive data input by a user and output data to a user.

For example, the terminal device 2000 is a mobile phone. After the terminal device 2000 is powered on, the processor may read the software program in the storage unit, interpret and execute instructions of the software program, and process the data of the software program. When data needs to be sent in a wireless manner, the processor performs baseband processing on the to-be-sent data and then outputs a baseband signal to the control circuit. The control circuit performs radio frequency processing on the baseband signal and then sends a radio frequency signal in a form of an electromagnetic wave by using the antenna. When data is sent to the terminal device 2000, the control circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 20 shows only one memory and one processor. In some embodiments, the terminal device 2000 may include a plurality of processors and memories. The memory may also be referred to as a storage medium, a storage device, or the like. This is not limited in this embodiment.

In an optional implementation, the processor may include a baseband processor and a central processing unit. The baseband processor is mainly configured to process a communication protocol and communication data. The central processing unit is mainly configured to control the entire terminal device 2000, execute a software program, and process data of the software program. The processor in FIG. 20 integrates functions of the baseband processor and the central processing unit. A person skilled in the art may understand that the baseband processor and the central processing unit may alternatively be processors independent of each other, and are interconnected by using a technology such as a bus. The terminal device 2000 may include a plurality of baseband processors to adapt to different network standards, and the terminal device 2000 may include a plurality of central processing units to enhance a processing capability of the terminal device. The components of the terminal device 2000 may be connected by using various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the storage unit in a form of a software program, and the processor executes the software program to implement a baseband processing function.

In an example, the antenna and the control circuit that have a receiving/sending function may be considered as a transceiver unit 2001 of the terminal device 2000, and the processor having a processing function may be considered as a processing unit 2002 of the terminal device 2000. As shown in FIG. 20, the terminal device 2000 includes the transceiver unit 2001 and the processing unit 2002. The transceiver unit may also be referred to as a transceiver, a transceiver, a transceiver apparatus, or the like. Optionally, a component that is in the transceiver unit 2001 and that is configured to implement a receiving function may be considered as a receiving unit, and a component that is in the transceiver unit 2001 and that is configured to implement a sending function may be considered as a sending unit. In other words, the transceiver unit 2001 includes the receiving unit and the sending unit. For example, the receiving unit may also be referred to as a receiver, a receiver, a receiving circuit, or the like, and the sending unit may be referred to as a transmitter, a transmitter, a transmitting circuit, or the like.

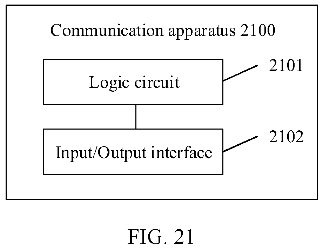

An embodiment of this application further provides a communication apparatus 2100 shown in FIG. 21. The communication apparatus 2100 includes a logic circuit 2101 and an input/output interface 2102. The input/output interface 2102 is configured to receive a signal from a communication apparatus other than the communication apparatus 2100, and send the signal to the logic circuit 2101, or send a signal from the logic circuit 2101 to a communication apparatus other than the communication apparatus 2100. The logic circuit 2101 is configured to perform any method performed by the terminal device in the foregoing method embodiments, or is configured to perform any method performed by the second network device in the foregoing method embodiments.

This embodiment of this application and the method embodiments shown in the optical wireless communication method 100 to the optical wireless communication method 400 are based on a same concept, and bring same technical effects. For a specific principle, refer to the descriptions of the embodiments shown in the optical wireless communication method 100 to the optical wireless communication method 400. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or some of the foregoing embodiments may be implemented by using software, hardware, firmware, or any combination thereof. When software is used to implement the foregoing embodiments, all or some of the embodiments may be implemented in a form of a computer program. The computer program product includes one or more computer instructions. When the computer instructions are loaded and executed on the computer, the interaction or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical wireless communication method, wherein the method comprises:
sending, by a terminal device, optical wireless communication OWC response information, wherein the OWC response information comprises a plurality of signal-to-noise ratios SNRs, and the plurality of SNRs are obtained by the terminal device by measuring optical wireless signals from a plurality of first network devices; and
obtaining, by the terminal device, downlink data, wherein
the downlink data is data from one or more first network devices determined based on the plurality of SNRs.

2. The method according to claim 1, wherein
the OWC response information is carried in an OWC announcement frame, and the OWC announcement frame comprises n address fields and n signal-to-noise ratio fields;
an address i field indicates an address of a first network device i, and a signal-to-noise ratio i field indicates an SNR corresponding to the first network device i; and
i is an integer greater than or equal to 1 and less than or equal to n, and n is an integer greater than or equal to 1.

3. The method according to claim 2, wherein
the OWC announcement frame further comprises an SNR radio access field, and the SNR radio access field indicates an SNR of a radio signal received by the terminal device.

4. The method according to claim 1, wherein the OWC response information is carried on a physical uplink control channel.

5. The method according to any one of claims 1 to 4, wherein the method further comprises:
sending, by the terminal device, an acknowledgment-optical wireless communication ACK-OWC frame, wherein the ACK-OWC frame comprises a first control field and a first information field, the first control field indicates an identifier of the downlink data, and the first information field indicates the downlink data; or
sending, by the terminal device, a block acknowledgment-optical wireless communication BlockACK-OWC frame, wherein the BlockACK-OWC frame comprises a second control field and a second information field, the second control field indicates an identifier of each data block in the downlink data, and the second information field indicates each data block in the downlink data.

6. The method according to any one of claims 1 to 5, wherein before the sending, by a terminal device, optical wireless communication OWC response information, the method further comprises:
obtaining, by the terminal device, optical wireless communication OWC request information, wherein the OWC request information is used to request the terminal device to enable a wireless light receiving function; and
responding, by the terminal device, to the OWC request information, and determining the SNRs of the plurality of optical wireless signals.

7. The method according to claim 6, wherein
the OWC request information is carried in an OWC request frame, or the OWC request information is carried on a physical downlink control channel.

8. An optical wireless communication method, wherein the method comprises:
obtaining, by a second network device, optical wireless communication OWC response information, wherein the OWC response information comprises a plurality of signal-to-noise ratios SNRs, and the plurality of SNRs are obtained by measuring a plurality of optical wireless signals;
determining, by the second network device based on the plurality of SNRs, a first network device to send downlink data; and
sending, by the second network device, the downlink data by using the first network device.

9. The method according to claim 8, wherein the sending, by the second network device, the downlink data by using the first network device comprises:
when determining, by the second network device based on a maximum transmission rate supported by the first network device, to perform downlink transmission by using an OWC, sending downlink data by using the first network device.

10. The method according to claim 8 or 9, wherein the determining, by the second network device based on the plurality of SNRs, a first network device to send downlink data comprises:
determining, by the second network device based on the plurality of SNRs and load information of a plurality of first network devices corresponding to the plurality of SNRs, the first network device to send the downlink data, wherein the load information is information that indicates a terminal device served by the first network device at a current moment or in a preset time period.

11. The method according to any one of claims 8 to 10, wherein
the OWC response information is carried in an OWC announcement frame, and the OWC announcement frame comprises n address fields and n signal-to-noise ratio fields;
an address i field indicates an address of a first network device i, and a signal-to-noise ratio i field indicates an SNR corresponding to the first network device i; and
i is an integer greater than or equal to 1 and less than or equal to n, and n is an integer greater than or equal to 1.

12. The method according to claim 11, wherein
the OWC announcement frame further comprises an SNR radio access field, and the SNR radio access field indicates an SNR of a radio signal received by the terminal device.

13. The method according to any one of claims 8 to 10, wherein the OWC response information is carried on a physical uplink control channel.

14. The method according to any one of claims 8 to 13, wherein the method further comprises:
obtaining, by the second network device, an acknowledgment-optical wireless communication ACK-OWC frame, wherein the ACK-OWC frame comprises a first control field and a first information field, the first control field indicates an identifier of the downlink data, and the first information field indicates the downlink data; or
obtaining, by the second network device, a block acknowledgment-optical wireless communication BlockACK-OWC frame, wherein the BlockACK-OWC frame comprises a second control field and a second information field, the second control field indicates an identifier of each data block in the downlink data, and the second information field indicates each data block in the downlink data.

15. The method according to any one of claims 8 to 14, wherein before the obtaining, by a second network device, optical wireless communication OWC response information, the method further comprises:
sending, by the second network device, optical wireless communication OWC request information, wherein the OWC request information is used to request the terminal device to enable a wireless light receiving function.

16. The method according to claim 15, wherein
the OWC request information is carried in an OWC request frame, or the OWC request information is carried on a physical downlink control channel.

17. A communication apparatus, wherein the communication apparatus comprises:
a transceiver unit, configured to send optical wireless communication OWC response information, wherein the OWC response information comprises a plurality of signal-to-noise ratios SNRs, the plurality of SNRs are obtained by a processing unit by measuring a plurality of optical wireless signals, and the plurality of SNRs are used to determine a first network device to send downlink data to the processing unit; and
the transceiver unit is further configured to obtain the downlink data.

18. The communication apparatus according to claim 17, wherein
the OWC response information is carried in an OWC announcement frame, and the OWC announcement frame comprises n address fields and n signal-to-noise ratio fields;
an address i field indicates an address of a first network device i, and a signal-to-noise ratio i field indicates an SNR corresponding to the first network device i; and
i is an integer greater than or equal to 1 and less than or equal to n, and n is an integer greater than or equal to 1.

19. The communication apparatus according to claim 18, wherein
the OWC announcement frame further comprises an SNR radio access field, and the SNR radio access field indicates an SNR of a radio signal received by the terminal device.

20. The communication apparatus according to claim 17, wherein the OWC response information is carried on a physical uplink control channel.

21. The communication apparatus according to any one of claims 17 to 20, wherein the transceiver unit is further configured to:
send an acknowledgment-optical wireless communication ACK-OWC frame, wherein the ACK-OWC frame comprises a first control field and a first information field, the first control field indicates an identifier of the downlink data, and the first information field indicates the downlink data; or
send a block acknowledgment-optical wireless communication BlockACK-OWC frame, wherein the BlockACK-OWC frame comprises a second control field and a second information field, the second control field indicates an identifier of each data block in the downlink data, and the second information field indicates each data block in the downlink data.

22. The communication apparatus according to any one of claims 17 to 21, wherein the communication apparatus further comprises a processing unit, and before the transceiver unit sends the optical wireless communication OWC response information, the processing unit is configured to:
obtain optical wireless communication OWC request information, wherein the OWC request information is used to request the terminal device to enable a wireless light receiving function; and
respond to the OWC request information, and determine the SNRs of the plurality of optical wireless signals.

23. The communication apparatus according to claim 22, wherein
the OWC request information is carried in an OWC request frame, or the OWC request information is carried on a physical downlink control channel.

24. A communication apparatus, wherein the communication apparatus comprises:
a transceiver unit, configured to obtain optical wireless communication OWC response information, wherein the OWC response information comprises a plurality of signal-to-noise ratios SNRs, and the plurality of SNRs are obtained by measuring a plurality of optical wireless signals; and
a processing unit, configured to determine, based on the plurality of SNRs, a first network device to send downlink data, wherein
the transceiver unit is further configured to send the downlink data by using the first network device.

25. The communication apparatus according to claim 24, wherein when sending the downlink data by using the first network device, the transceiver unit is specifically configured to:
when determining, based on a maximum transmission rate supported by the first network device, to perform downlink transmission by using an OWC, send downlink data by using the first network device.

26. The communication apparatus according to claim 24 or 25, wherein when determining, based on the plurality of SNRs, the first network device to send the downlink data, the processing unit is specifically configured to:
determine, by the processing unit based on the plurality of SNRs and load information of a plurality of first network devices corresponding to the plurality of SNRs, the first network device to send the downlink data, wherein the load information is information that indicates a terminal device served by the first network device at a current moment or in a preset time period.

27. The communication apparatus according to any one of claims 24 to 26, wherein
the OWC response information is carried in an OWC announcement frame, and the OWC announcement frame comprises n address fields and n signal-to-noise ratio fields;
an address i field indicates an address of a first network device i, and a signal-to-noise ratio i field indicates an SNR corresponding to the first network device i; and
i is an integer greater than or equal to 1 and less than or equal to n, and n is an integer greater than or equal to 1.

28. The communication apparatus according to claim 27, wherein
the OWC announcement frame further comprises an SNR radio access field, and the SNR radio access field indicates an SNR of a radio signal received by the terminal device.

29. The communication apparatus according to any one of claims 24 to 26, wherein the OWC response information is carried on a physical uplink control channel.

30. The communication apparatus according to any one of claims 24 to 29, wherein the processing unit is further configured to:
obtain an acknowledgment-optical wireless communication ACK-OWC frame, wherein the ACK-OWC frame comprises a first control field and a first information field, the first control field indicates an identifier of the downlink data, and the first information field indicates the downlink data; or
obtain a block acknowledgment-optical wireless communication BlockACK-OWC frame, wherein the BlockACK-OWC frame comprises a second control field and a second information field, the second control field indicates an identifier of each data block in the downlink data, and the second information field indicates each data block in the downlink data.

31. The communication apparatus according to any one of claims 24 to 30, wherein before obtaining the optical wireless communication OWC response information, the processing unit is further configured to:
send optical wireless communication OWC request information by using the transceiver unit, wherein the OWC request information is used to request the terminal device to enable a wireless light receiving function.

32. The communication apparatus according to claim 31, wherein
the OWC request information is carried in an OWC request frame, or the OWC request information is carried on a physical downlink control channel.

33. A communication apparatus, comprising a processor, wherein
the processor is configured to execute a computer program or instructions stored in a memory, so that the communication apparatus performs the method according to any one of claims 1 to 7, or performs the method according to any one of claims 8 to 16.

34. A communication apparatus, comprising a logic circuit and an input/output interface, wherein the input/output interface is configured to receive a signal from another communication apparatus other than the communication apparatus and transmit the signal to the logic circuit, or send a signal from the logic circuit to another communication apparatus other than the communication apparatus, and the logic circuit is configured to perform the method according to any one of claims 1 to 7, or is configured to perform the method according to any one of claims 8 to 16.

35. A computer-readable storage medium, configured to store a computer program, wherein when the computer program is run on a computer, the computer is enabled to perform the method according to any one of claims 1 to 7, or the computer is enabled to perform the method according to any one of claims 8 to 16.

36. A computer program product, comprising computer instructions, wherein when the computer instructions are run on a computer, the computer is enabled to perform the method according to any one of claims 1 to 7, or the computer is enabled to perform the method according to any one of claims 8 to 16.
